# EUROPÄISCHE PATENTANMELDUNG

(11) **EP 2 251 651 A2**
(43) Veröffentlichungstag der Anmeldung: **17.11.2010**
(21) Anmeldenummer: 10009166.9
(22) Anmeldetag: 23.04.2008
(51) Int. Cl.: G01F 1/684, G01F 1/692, G01F 1/698, F02M 25/07

(54) **Anordnung eines Schichtwiderstandes einer anemometrischen Messeinrichtung in einem Abgasrohr**

(30) Priorität: 26.04.2007 DE 102007020084
(62) Teilanmeldung aus: 08735363.7
(71) Anmelder: HERAEUS SENSOR TECHNOLOGY GMBH, 63450 Hanau (DE)
(72) Erfinder: Wienand, Karlheinz, Dr., 63741 Aschaffenburg (DE); Ullrich, Karl-Heinz, Dr., 64823 Groß-Umstadt (DE); Muziol, Matthias, 63533 Mainhausen (DE)
(74) Vertreter: Kühn, Hans-Christian

(57) **Zusammenfassung**

Die Erfindung betrifft die Anordnung eines Schichtwiderstands (Chip) in einem Abgasrohr oder Abgasrückführrohr, wobei der Schichtwiderstand in einem Träger befestigt ist, der gegen eine Abschirmung oder ein Gehäuse abgedichtet ist, die oder das dicht mit dem Abgasrohr oder Abgasrückführrohr verbunden ist, wobei der Träger und die Abschirmung oder das Gehäuse radial außerhalb des Abgasrohrs oder Abgasrückführrohrs von diesem beabstandet gegeneinander abgedichtet sind.

## Beschreibung

Die vorliegende Erfindung betrifft die Anordnung von Schichtwiderständen (Chips), insbesondere für Anemometer oder Rußsensoren oder Temperaturfühler in Rohren mit heißen Fluiden, insbesondere Abgasrohren, sowie Messeinrichtungen zur Messung in heißen Fluiden mit Schichtwiderständen und eine Abgasrückführung mit einem Heißfilm-Anemometer. Schichtwiderstände sind gemäß der Heraeus-Broschüre PTM-W2 kommerziell erhältlich.

DE 102 60 896 offenbart einen Schichtwiderstand (Chip) für anemometrische Messungen, der in ein Abgasrohr ragt.

DE 199 59 854 offenbart Schichtwiderstände (Chips), die in ein Abgasrohr ragen und in einem Träger befestigt sind, der mit dem Abgasrohr verbunden ist. DE 199 59 854 beschreibt eine Abgasrückführung, bei der die einströmende Luft mit einem Strömungsmassensensor nach dem anemometrischen Prinzip gemessen wird und für die Messung der Abgasmenge ein zweiter Strömungsmassensensor im Abgaskanal nach einer Wasserkühlung angeordnet ist.

Das anemometrische Messprinzip eines Strömungsmengen-Sensors ist aus der DE 195 06 231 bekannt.

DE 103 05 694 offenbart einen Strömungsmassensensor für Abgasmessungen, bei dem die Chipteile aus dünnen Metallfolien hergestellt sind. Diese Sensoren sind störanfällig und liefern gegebenenfalls nicht reproduzierbare Ergebnisse.

In DE 10 2006 058 425 ist bei einem Heißfilmanemometer ein Heiz- und Temperaturmesselement in einer Keramikscheibe oder einer Metallscheibe angeordnet.

Die Aufgabe der vorliegenden Erfindung besteht darin, eine temperaturwechselbeständige Verbindung zwischen dem Keramikchip und dem Abgasrohr bereitzustellen, die hinsichtlich Aufwand, Material und Kosten für die Massenproduktion geeignet ist. Die Anfälligkeit von sensorgesteuerten Abgasrückführungen ist zu minimieren und deren Empfindlichkeit zu maximieren.

Zur Lösung der Aufgabe wird der Träger des Schichtwiderstands (Chip) außerhalb des Abgasrohrs oder Abgasrückführrohrs gegen eine Abschirmung oder ein Gehäuse abgedichtet.

Dies ermöglicht eine Anordnung, in der Träger außerhalb des Abgasrohres in dem metallischen Gehäuse befestigt sind, insbesondere zwischen Abgasrückführrohr und der Abdichtung des Trägers gegen das Gehäuse.

Weiterhin wird erfindungsgemäß ermöglicht, die Abschirmung innerhalb des Abgas-, insbesondere Abgasrückführrohres vom Träger zu beabstanden.

Die Lösungen der Aufgabe sind in den unabhängigen Ansprüchen beschrieben. Bevorzugte Ausführungen sind in den abhängigen Ansprüchen beschrieben.

In bevorzugten Ausführungen ist die Stromdurchführung für den Schichtwiderstand gegenüber dem Medium im Abgasrohr abgedichtet und elektrisch gegen das Abgasrückführrohr und dem Abgasrohr isoliert. Hierzu ist es besonders vorteilhaft, den Schichtwiderstand im Bereich seines Fixierungstropfens zum keramischen Träger hin abzudichten, weil dadurch die Anschlussdrähte von dem Abgas getrennt sind und eine Verfälschung einer Messung durch Abgas im Bereich der Anschlussdrähte ausgeschlossen wird. Die Problematik der Verfälschung von Messungen liegt unter anderem daran, dass ein Isolationsverlust auftritt oder Parallelwiderstände auftreten, beispielsweise durch Ablagerungen oder Feuchtigkeit.

In einer Anordnung eines Schichtwiderstands (Chip), insbesondere Schichtwiderstandes eines Anemometers in einem Rohr mit heißem Fluid, insbesondere einem Abgasrohr oder Abgasrückführrohr, wobei der Schichtwiderstand (Chip) in einem Träger, insbesondere Hohlkörper befestigt ist, der gegen eine Abschirmung oder ein Gehäuse abgedichtet ist, die oder das dicht mit dem Abgasrohr oder Abgasrückführrohr verbunden ist, wird erfindungsgemäß der Träger außerhalb des Abgasrohrs oder Abgasrückführrohrs gegen die Abschirmung oder das Gehäuse abgedichtet.

Insbesondere umfasst eine Messeinrichtung den Schichtwiderstand, den Träger, die Abschirmung sowie die Dichtung zwischen dem Träger und der Abschirmung.

Dies ermöglicht Messungen mit einem Schichtwiderstand (Chip) innerhalb eines über 500°C heißen Fluids in einem Metallrohr über dessen Lebensdauer, wenn der Schichtwiderstand (Chip) in einem Träger befestigt ist, der außerhalb des Metallrohres gegen ein Metallgehäuse abgedichtet ist, und erfindungsgemäß das Metallgehäuse dicht mit dem Abgasrohr oder Abgasrückführrohr verbunden ist.

Eine hierzu für Messungen in heißen Fluiden geeignete Messeinrichtung mit einem Schichtwiderstand, einem Träger, insbesondere Hohlkörper, in dem der Schichtwiderstand mechanisch befestigt ist, und einer Abschirmung oder einem metallischen Gehäuse, wobei die Abschirmung oder das metallisches Gehäuse gegen den Träger abgedichtet ist, weist erfindungsgemäß in der Längsrichtung des Trägers angeordnet die elektrischen Zuleitungen für den Schichtwiderstand auf, wobei der Schichtwiderstand hauptsächlich entlang der Trägerlänge von der Dichtung beabstandet ist, die den Träger gegen die Abschirmung oder das Gehäuse abdichtet. Erfindungsgemäß brauchen die zur Beabstandung des Träger gegen das Gehäuse verwendeten Abstandshalter nicht mehr luftdicht zu sein. Der hohe Aufwand für die Dichtigkeit aufgrund der Temperaturbelastung kann erfindungsgemäß eingespart werden. Die Zuleitungen bestehen aus den Anschlussdrähten des Schichtwiderstands und ggfs. zusätzlichen Verlängerungen. Die Erfindung erstreckt sich auch auf Schichtwiderstände mit Anschlussflächen statt Anschlussdrähten. In diesem Fall sind die Zuleitungen nicht Bestandteile des Schichtwiderstands.

In bevorzugten Ausführungen
- ist ein Schichtwiderstand in einer Öffnung eines Hohlkörpers befestigt,
- ist der Hohlkörper in dem metallischen Gehäuse befestigt,
- ist der Träger an seinem dem Schichtwiderstand abgewandten Ende gegen das Metallgehäuse abgedichtet,
- ist das Metallgehäuse von dem Träger, insbesondere einem keramischen Mehrloch-Kapillarrohr, beabstandet, insbesondere ist die Abschirmung innerhalb des Abgas- oder Abgasrückführrohrs vom Träger beabstandet.
- umschließt das Metallgehäuse den Träger, insbesondere ein keramisches Mehrloch-Kapillarrohr, auf der Seite des Schichtwiderstandes bis auf Durchführungen für den Schichtwiderstand oder die Schichtwiderstände,
- ist der Träger, insbesondere ein keramisches Mehrloch-Kapillarrohr, in einem Bereich zwischen dem Schichtwiderstand und der Dichtung an das Metallgehäuse befestigt,
- weist die Messeinrichtung zwei Träger, insbesondere keramische Mehrloch-Kapillarrohre auf, in denen jeweils ein Schichtwiderstand befestigt ist,
- ist der Schichtwiderstand im Bereich der Durchführung gasdicht gegen den Träger abgedichtet,
- besteht die gasdichte Dichtung aus anorganischem Material
- bestehen der Träger und Schichtwiderstand an der Stelle der Abdichtung aus füreinander ausdehnungsangepassten Materialien.

In einer einfachen Ausführung ist der Träger als Rohr ausgebildet.

Eine bevorzugte Messeinrichtung ist eine anemometrische Messeinrichtung eines Strömungssensors, enthaltend Schichtwiderstände, wobei erfindungsgemäß zwei Schichtwiderstände jeweils in einem Rohr befestigt sind, das so ausdehnungsangepasst ist, dass die Ausdehnungskoeffizienten des Keramikchips und des diesen tragenden Rohres um maximal **±** 2,5 x 10⁻⁶/K abweichen. Ausdehnungsangepasste Materialien ermöglichen eine Abdichtung mit anorganischem Material, beispielsweise Glas. Für nicht ausdehnungsangepasste Materialien weist Glas eine zu geringe Elastizität auf und die bekannten elastischen Dichtungsmaterialien weisen eine zu geringe Hitzebeständigkeit auf.

Bei einem Verfahren zur anemometrischen Messung, insbesondere in Abgasrückführrohren, wird erfindungsgemäß die anemometrische Messung mit einem Schichtwiderstand in dem Abgasrückführrohr durchgeführt, wobei der Träger des Schichtwiderstandes durch das Abgasrohr führt und auf seiner außerhalb des Abgasrohres befindlichen Seite gegen ein metallisches Gehäuse abgedichtet wird.

Bei einer Anordnung einer Messeinrichtung in einem Abgasrückführrohr zur anemometrischen Messung, insbesondere in Abgasrückführrohren, wird erfindungsgemäß die anemometrische Messung mit einem Schichtwiderstand in dem Abgasrückführrohr durchgeführt, wobei der Träger des Schichtwiderstandes durch das Abgasrohr führt und auf seiner außerhalb des Abgasrohres befindlichen Seite gegen ein metallisches Gehäuse abgedichtet wird.

Bei einem Verfahren zur Herstellung einer anemometrischen Messeinrichtung, umfassend einen Heizer, der ggfs. noch einen oder zwei Messwiderstände aufweist und ggfs. einen zusätzlichen Messwiderstand, der ggfs. noch einen Heizwiderstand aufweist, wird der als Heizer ausgebildete Schichtwiderstand in einem Hohlkörper befestigt, dessen Ausdehnungskoeffizient sich von dem des Schichtwiderstandes um nicht mehr als 2,5 x 10⁻⁶/K, insbesondere um maximal 1 x 10⁻⁶/K unterscheidet, wobei erfindungsgemäß der Hohlkörper in einem metallischen Gehäuse so befestigt wird, dass er bis auf die Befestigung von dem metallischen Gehäuse beabstandet bleibt. Vorzugsweise wird der Hohlkörper zusätzlich gegen das Metallgehäuse an dem dem Schichtwiderstand entgegengesetzten Ende des Rohres abgedichtet.

Zur Herstellung einer Messeinrichtung, insbesondere anemometrischen Messeinrichtung, wird erfindungsgemäß ein Hohlkörper, auf dem ein Schichtwiderstand befestigt ist, an seinem dem Schichtwiderstand entgegengesetzten Ende mit einem organischen Dichtmaterial gegen das Metallgehäuse abgedichtet.

Zur Herstellung einer in ein Abgasrohr oder ein Abgasrückführrohr ragenden Messeinrichtung, die einen Schichtwiderstand aufweist, der in einem Hohlkörper befestigt ist, der wiederum in einem Metallgehäuse befestigt und von diesem beabstandet ist, wird erfindungsgemäß diese Befestigung des Hohlkörpers an dem Metallgehäuse außerhalb des Abgasrohres angeordnet.

Zur Verwendung eines metallischen Gehäuses zur Wärmeisolierung einer Messeinrichtung gegen heiße Abgase ist das metallische Gehäuse von einem Hohlkörper beabstandet, der an seinem in das Abgasrohr ragenden Ende einen Schichtwiderstand trägt. Der Hohlkörper ist an dem metallischen Gehäuse vorzugsweise außerhalb des Rohres mit den heißen Abgasen befestigt.

Die erfindungsgemäße Messeinrichtung eignet sich zur Verwendung als anemometrische Messeinrichtung oder als Rußsensor oder als Temperatursensor.

Man kann pro Anordnung oder Messeinrichtung mehrere Schichtwiderstände in einem Träger anordnen oder für mehrere Schichtwiderstände mehrere Träger verwenden, beispielsweise in einer Anemometer-Messeinrichtung mit einem Schichtwiderstand als Heizelement und einem anderen Schichtwiderstand als Temperatursensor. Der Chip mit dem Heizelement weist vorzugsweise zusätzlich einen, insbesondere zwei Messwiderstände auf, mit denen sich die Richtung des Gasstromes ermitteln lässt. Weiterhin bevorzugt weist der Temperatursensor einen Heizer zum Freibrennen auf.

Die Messung der Strömungsmassen erfolgt gemäß einer erfindungsgemäßen Ausführungsform weder in einem mit Wasser gekühlten Bereich, noch nach einem mit Wasser gekühlten Bereich. Für diese Ausführung wird das Heißfilm-Anemometer vor dem Kühler angeordnet oder innerhalb eines mit Luft gekühlten Kühlers.

Erfindungsgemäß braucht die Strömungsmenge von angesaugter Luft nicht mehr ermittelt werden.

Mit den ermittelten Parametern der Fahrzeug-Brennkraft-Maschine wird eine Optimierung des Motorbetriebes hinsichtlich geringer Umweltbelastung und Effizienz erzielt, wobei die Parameter auf sehr einfache Weise ermittelt werden.

Aus der Maschine austretendes Abgas wird einem Heißfilm-Anemometer zugeführt, wobei aus den ermittelten Strömungsmengen von rückgeführtem Abgas und gegebenenfalls angesaugter Luft ein Istwert-Signal (X, X1, X2) gebildet und mit einem Sollwert-Signal (w) für einen optimalen Arbeitspunkt der Maschine verglichen wird, wobei eine Regelabweichung des Istwert-Signals zu einem Stellsignal führt, das mit Hilfe eines Stellgliedes in die Abgasrückführung eingreift.

Mit Hilfe eines Stellsignals (Y, Y1) wird wenigstens ein Stellglied in der Abgasrückführung angesteuert, das vorzugsweise als steuerbares Ventil ausgebildet ist.

In einer bevorzugten Ausgestaltung des Verfahrens wird das Sollwert-Signal (W) aus einem Leistungsvorgabesignal (z.B. Gaspedal) und wenigstens einem Parameter der Maschine abgeleitet. Als Parameter hat sich ein Signal bewährt, das aus der Abgastemperatur oder der Drehzahl sowie der Masse des rückgeführten Abgases gebildet wird. Dabei wird wenigstens ein Signal als Maschinenparameter mit einem Referenzsignal durch Differenzwertbildung verglichen, wobei das Überschreiten eines vorgegebenen Differenzwertes zu einem Stellsignal (Y, Y1, Y2) führt.

Während die Stellsignale Y, Y1 - vorzugsweise mittels steuerbarem Ventil - direkt in die Abgas-Rückführung eingreifen, wirkt Stellsignal Y2 auf ein Stellglied ein, das sich im Eintrittsbereich der Brennkraftmaschine befindet, in den ein Gemisch aus anströmender Luft und aus teilweise rückgeführtem Abgas einströmt.

In einer Ausgestaltung des Verfahrens werden im Heißfilm-Anemometer wenigstens zwei auf konstanter Temperatur gehaltene Heizwiderstände nacheinander zur Messung der Strömungsmasse des Abgases angeströmt; dabei werden die Heizwiderstände jeweils von einem verstellbaren Strom (I₁, I₂) durchflossen, wobei aus der Stärke der Ströme (I₁, I₂) ein Signal für die Strömungsmasse und deren Richtung gebildet wird.

Weiterhin wird in einer Ausgestaltung des Verfahrens aus wenigstens einem pulsierenden Strom I₁, I₂ durch abwechselnde Multiplikation der Strom-Amplitude mit +1 und -1 und eine anschließende Differenzwertbildung der resultierende Fluss des Massestroms ermittelt.

Bei einer Vorrichtung zur (teilweisen) Abgasrückführung aus einem Austrittsbereich einer Fahrzeug-Brennkraft-Maschine in einen Lufteintrittsbereich, bei dem ein mittels Regelung einstellbares Gemisch aus Abgas und einströmender Luft der Maschine zuführbar ist, wird erfindungsgemäß zur Ermittlung der Masse des rückgeführten Abgases Luft ein Heißfilm-Anemometer im Abgasrückführkanal vor der Kühlung oder in einem mit Luft gekühlten Kühler angeordnet.

Der Austrittsbereich ist über einen Strömungskanal für die Abgasrückführung, der ein steuerbares Ventil als Stellglied und das Heißfilm-Anemometer aufweist, mit einem Eintrittsbereich der Brennkraft-Maschine verbunden.

Damit ist eine Kraftstoff-Menge in Abhängigkeit von der Luftmassen-Durchflussrate unter Berücksichtigung eines Leistungsvorgabe-Signals einstellbar.

In einer ersten bevorzugten Ausgestaltung der Vorrichtung weist das Heißfilm-Anemometer wenigstens einen Messwiderstand und wenigstens einen Heizwiderstand auf, wobei die Widerstände jeweils in Mikrosystemtechnik ausgebildet sind. Vorteilhafterweise sind die Widerstände als Dünnschicht- oder Dickschicht-Element auf der messtechnischen Basis von Platin- bzw. Platingruppenmetall ausgebildet.

Der Heizwiderstand bzw. die Heizwiderstände sind für einen Betrieb im Temperaturbereich von 500 bis 750 °C vorgesehen.

Ein Massenstrom-Sensor mit einem Messwiderstand kurzer Ansprechzeit und einem schnellen Mikroheizer ist beispielsweise aus der EP 0 964 230 A2 bekannt.

In einer zweiten vorteilhaften Ausgestaltung der Erfindung weist das Heißfilm-Anemometer mindestens zwei schnelle Mikroheizer bzw. Heizwiderstände auf, die auf wohl definierten festen Übertemperaturen z.B. 450°C und 550 °C betrieben werden. Die Temperaturen sind so gewählt, dass sich ansetzender Ruß durch Pyrolyse stets verbrannt wird und die Mikroheizer somit stets sauber bleiben. Eine schnelle Regelelektronik speist die Heizer mittels Strom so, dass ihre Temperaturen konstant gehalten werden. Die Auswertung der Heizströme lässt einen eindeutigen Rückschluss sowohl auf den Massenstrom als auch auf die Massentemperatur zu. Durch Verwendung von Platin-Heizelementen, die sowohl in Dick- als auch in Dünnschichttechnik hergestellt sein können, lassen sich unter Ausnutzung der wohldefinierten Widerstands-Temperatur-Kennlinie von Platinheiztemperaturen von 500°C bis 750°C einstellen.

Ein wesentlicher Vorteil der zweiten Ausgestaltungsform (zwei Heizwiderstände) ist darin zu sehen, dass auf den Heizwiderständen praktisch keinerlei Verrußung vorkommt, so dass sie stets mit optimaler Messcharakteristik betrieben werden.

Die Heiz- bzw. Messwiderstände sind vorteilhafterweise in wenigstens zwei Leiterbahnen auf einer plattenförmigen Membran - vorzugsweise aus einem elektrisch isolierenden und wärmebeständigem Werkstoff wie beispielsweise Keramik - ausgebildet.

In erfinderischer Weiterbildung werden Heißfilm-Anemometer für die Massenproduktion geeignet angeordnet und für die Massenproduktion geeignete Heißfilm-Anemometer für Abgasrückführungen bereitgestellt, die noch der Drift entgegenwirken, insbesondere selbstreinigende Heißfilm-Anemometer oder funktionsstabile starken Verschmutzungen, wie z.B. Abgas, aussetzbare Strömungssensorelemente.

Ein maßgeblicher Aspekt für die vorliegende Erfindung ist eine Selbstreinigung des Temperaturmesselementes durch Ausglühen mittels eines Heizleiters. Insbesondere ist dieser Heizleiter auf der Chipseite des Temperaturmesselements integriert. In einer bevorzugten Ausführung werden mindestens zwei Platin-Dünnfilmwiderstände auf einem keramischen Trägerplättchen angeordnet. Dies ermöglicht ein Erhitzen des Temperaturmesselements zum ausheizen oder ausglühen von Verunreinigungen.

Insbesondere sind die beiden Widerstände des Temperaturmesselements auf einem keramischen Untergrund angeordnet, vorzugsweise auf einem massiven Keramikplättchen.

Als keramische Komponenten eines mehrteiligen keramischen Bauteils sind neben dem Trägerteil, das vorzugsweise bereits als Laminat zusammengesetzt ist, noch das Temperaturmesselement und das Heizelement in Betracht zu ziehen. Ganz besonders bevorzugt ist das Trägerteil als Deckel ausgebildet oder als eine Seite bzw. Fläche eines Hohlkörpers, insbesondere dessen Stirnseite. Statt eines keramischen Trägers können die Widerstände auch auf keramischen Untergrund auf einem alternativen Träger angeordnet sein.

Es ist vorteilhaft, wenn das Temperaturmesselement rechteckige keramische Trägerplättchen mit zwei langen und zwei schmalen Kanten aufweist und dass die keramischen Trägerplättchen im Bereich einer der schmalen Kanten zwischen Keramikfolien des Keramikfolien-Laminats oder zwischen mindestens zwei Teilen des Keramikbauteils angeordnet sind.

Ebenso ist es vorteilhaft, wenn das mindestens eine Heizelement rechteckige keramische Trägerplättchen mit zwei langen und zwei schmalen Kanten aufweist und dass die keramischen Trägerplättchen im Bereich einer der schmalen Kanten zwischen Keramikfolien des Keramikfolien-Laminats oder zwischen mindestens zwei Teilen des Keramikbauteils angeordnet ist.

Ganz besonders bevorzugt weist das Temperaturmesselement oder das mindestens eine Heizelement ein rechteckiges keramisches Trägerplättchen mit zwei langen und zwei schmalen Kanten auf wobei die keramischen Trägerplättchen in Öffnungen eines Deckels oder einer Hohlkörperstirnseite angeordnet sind.

Die Platin-Dünnfilmwiderstände werden dabei vorzugsweise an dem, dem Keramikfolien-Laminat oder den Keramikbauteilen abgewandten Ende der Trägerplättchen angeordnet, um eine möglichst geringe thermische Beeinflussung der Platin-Dünnfilmwiderstände durch das thermisch träge Keramikfolien-Laminat oder die thermisch trägen Keramikbauteile zu gewährleisten.

Um eine gegenseitige Beeinflussung von Temperaturmesselement und Heizelement zu unterbinden, ist es von Vorteil, wenn der Platin-Dünnfilmwiderstand des Heizelements weiter vom Keramikfolien-Laminat oder vom Keramikbauteil entfernt angeordnet ist als der Platin-Dünnfilmwiderstand des Temperaturmesselements. Dadurch sind die Platin-Dünnfilmwiderstände des Heizelements nicht in der gleichen Strömungsfaser des Messmediums angeordnet wie die Platin-Dünnfilmwiderstände des Temperaturmesselements.

Erfindungsgemäß wird besonders bevorzugt auch eine anemometrische Messeinrichtung bereitgestellt, bei der Schichtwiderstände in einem Deckel oder einem Hohlkörper in einer Öffnung oder in Öffnungen des Deckels oder Hohlkörpers befestigt sind, wobei zwei Widerstände um ein bis drei Größenordnungen verschieden sind.

Der um ein bis drei Größenordnungen größere Widerstand eignet sich als Temperaturmesswiderstand und wird im Folgenden als solcher bezeichnet. Die um ein bis drei Größenordnungen gegenüber dem Temperaturmesswiderstand kleineren Widerstände eignen sich zum Heizen. Bezüglich dieser Heizwiderstände wird im Rahmen der vorliegenden Erfindung zwischen verschiedenen Funktionen unterschieden:
1. Heizwiderstände zur Selbstreinigung des Temperatursensors als Bestandteil des Temperatursensors.
2. Heizwiderstände als Heizleistungssensoren zur Ermittlung eines Masseflusses nach dem anemometrischen Prinzip.

Heizleistungssensoren mit zwei Heizleitern erlauben die Bestimmung der Richtung des Massenflusses. Heizleistungssensoren mit einem zusätzlichen Temperaturmesswiderstand gestatten eine genaue Temperatureinstellung des Heizleistungssensors. Die vorliegende Erfindung betrifft hierbei ausschließlich Schichtwiderstände, die als Dickschicht oder Dünnschicht ausgeführt sind, vorzugsweise in Platin, insbesondere als Platin-Dünnschicht. Die Schichtwiderstände sind auf Substrat angeordnet, insbesondere auf keramischem Untergrund. Man kann den keramischen Untergrund als Träger ausführen oder auf einem Träger, wie z.B. einem Metallplättchen anordnen. Im Sprachgebrauch werden auf einem Trägermaterial aufgebrachte Schichtwiderstände ebenfalls als Schichtwiderstände bezeichnet, so dass zwischen Schichtwiderständen im engeren Sinn als der reinen Widerstandsschicht und Schichtwiderständen einschließlich des Trägermaterials sprachlich nicht unterschieden wird. Die in Öffnungen eines Deckels oder Hohlkörpers gesteckten Schichtwiderstände umfassen das Substrat, auf dem die Dünn- oder Dickschicht als Widerstandsschicht angeordnet ist.

In bevorzugter Ausführung sind die Schichtwiderstände im engeren Sinn auf einem keramischen Untergrund angeordnet. Verschiedene Schichtwiderstände im weiteren Sinn können nebeneinander in einer Öffnung eines Deckels oder Hohlkörpers angeordnet werden oder aber separat in jeweils einer Öffnung. Vorzugsweise sind Heizleistungssensoren und Temperatursensoren voneinander beabstandet. Zwei Heizleiter eines Heizleistungssensors sind vorzugsweise so hintereinander angeordnet, dass sie in der Strömungsrichtung hintereinander liegen. Vorzugsweise werden Heizleistungssensoren mit zwei Heizleitern auf einem gemeinsamen Untergrund oder mit zwei nacheinander angeordneten, identischen Chips ausgeführt.

Die Öffnungen des Deckels oder Hohlkörpers sind zweckmäßigerweise Schlitze oder Bohrungen.

Der Deckel ist zum dichten Abschluss eines Rohres vorgesehen. Ist der Deckel aus Metall, kann er mit einem Metallrohr verschweißt werden. Die Schichtwiderstände im weiteren Sinne werden durch die Öffnung oder die Öffnungen des Deckels geführt und in der Öffnung oder in den Öffnungen am Deckel befestigt. Der Hohlkörper dient zur Aufnahme der Anschlüsse der Schichtwiderstände, deren sensitiver Teil durch die Öffnung oder die Öffnungen aus dem Hohlkörper ragt.

Ein maßgeblicher Aspekt der vorliegenden Erfindung ist, dass in Dick- oder Dünnschicht erzeugte Widerstände zu einem leicht in Massenproduktion in einen Abgaskanal einbaubaren Sensorelement integriert werden. Die erfindungsgemäße Lösung, Schichtwiderstände in einen Deckel oder Hohlkörper zu stecken, ermöglicht eine einfache Abdichtung des Deckels oder Hohlkörpers sowohl bezüglich des Trägermaterials der Widerstände als auch des Materials des Abgaskanals.

Erfindungsgemäß wird dadurch erreicht, dass die Schichtwiderstände senkrecht zur Grundfläche eines Deckels oder Hohlkörpers ausführbar sind. Hieraus ergeben sich produktionstechnische Vorteile gegenüber einer parallel zu einer Platte fortgeführten Anordnung. Dabei ist die Erfindung nicht auf eine senkrechte Ausführung beschränkt, sondern ermöglicht beliebige Winkel zur Oberfläche des Deckels bzw. Hohlkörpers. Als wesentlicher erfinderischer Vorteil ist die senkrechte Komponente von Winkeln gemäß der vorliegenden Erfindung ausführbar. Dementsprechend tritt der Vorteil der vorliegenden Erfindung besonders bei Winkeln von 60 bis 90 Grad, insbesondere von 80 bis 90 Grad auf.

In bevorzugten Ausführungen
- ist der Hohlkörper einseitig offen, insbesondere als einseitig verschlossenes Rohr ausgebildet;
- ist der Deckel als Scheibe ausgebildet;
- ist die Grundfläche einer Öffnung zur Aufnahme mindestens zweier Schichtwiderstände mindestens um eine Größenordnung kleiner als die Deckelgrundfläche oder eine entsprechende Hohlkörpergrundfläche;
- weist der Deckel oder der Hohlkörper zwei Öffnungen zur Aufnahme von Schichtwiderständen auf;
- besteht der Deckel aus keramischem Material;
- sind die auf keramischem Trägermaterial gehaltenen Schichtwiderstände in der Öffnung eines keramischen Deckels, insbesondere einer keramischen Scheibe mit Glaslot befestigt;
- sind die auf einem keramischen Substrat getragenen Schichtwiderstände in wenigstens einer Öffnung eines Metalldeckels oder Hohlkörpers, insbesondere einer auf einem Metallrohr geschweißten Metallscheibe mit Verguss oder Glas befestigt;
- liegen die beiden Widerstände des Temperaturmesselements in einer Ebene;
- rahmt der kleinere Widerstand (Heizer 202d) den größeren Widerstand (202a zur Temperaturmessung) ein.

Die erfindungsgemäße Messeinrichtung eignet sich für Strömungssensoren oder Rußsensoren.

Das Heißfilm-Anemometer wird mit dem Heizleistungswiderstand und dem Temperatursensor nach dem anemometrischen Prinzip betrieben. Erfindungsgemäß wird der Temperatursensor als Teil einer anemometrischen Messeinrichtung mit einem weiteren Heizleiter ausgestattet. Hierdurch wird eine Reinigung des Temperatursensors durch Ausglühen mittels Heizer ermöglicht. Es hat sich bewährt, in der anemometrischen Messeinrichtung Temperatursensor und den vom Heizer des Temperatursensors zu unterscheidenden Heizleistungssensor zu entkoppeln, vorzugsweise zu beabstanden, insbesondere in separate Öffnungen des Deckels oder Hohlkörpers zu stecken. Der Temperatursensor weist einen deutlich höheren Widerstand auf als die Heizer, typischerweise ein bis drei Größenordnungen höher. Mit dem Temperatursensor lässt sich der Einfluss der Temperatur des Abgases auf die Bestimmung der Strömungsmasse korrigieren.

Vom Temperatursensor zu unterscheiden ist ein gegebenenfalls auf dem Heizleistungssensor angeordneter Temperaturmesswiderstand, mit dem die Temperatur des Heizleiters besonders genau einstellbar ist. Ein fertiger Temperaturmesswiderstand ist im Unterschied zum Temperatursensor nicht für die Messung der Fluidtemperatur vorgesehen, da er während des Betriebs des Heizleistungssensors nur zu dessen Temperatursteuerung geeignet ist.

Der Heizleistungssensor und der Temperatursensor weisen vorzugsweise beide jeweils einen Heizleiter und einen Temperaturmeßwiderstand auf. Sind Heizleistungssensor und Temperatursensor Baugleich wird Ihre funktionelle Bestimmung durch die Elektrik bestimmt.

Es hat sich bewährt, die Träger der Platin-Dünnfilm-Widerstände als dünne Plättchen auszubilden, so dass eine äußerst geringe thermische Trägheit des Systems und damit eine hohe Ansprechgeschwindigkeit der Platin-Dünnfilm-Widerstände resultiert. Zur Bildung eines Keramikverbunds können gesinterte Keramikfolien eingesetzt werden, die dann vorzugsweise mit einem Glaslot verklebt werden. Die zum Aufbau des Heißfilm-Anemometers verwendeten Materialien können hervorragend bei Temperaturen im Bereich von - 40°C bis + 800°C eingesetzt werden.

Besonders bevorzugt ist dabei, wenn die keramischen Trägerplättchen eine Dicke im Bereich von 100 µm bis 650 µm, insbesondere 150 µm bis 400 µm aufweisen. Als Material für die keramischen Trägerplättchen hat sich Al₂O₃ bewährt, insbesondere mit mindestens 96 Gew.-% und vorzugsweise über 99 Gew.-%.

Für die Platin-Dünnfilm-Widerstände hat es sich bewährt, wenn diese jeweils eine Dicke im Bereich von 0,5 µm bis 2 µm, insbesondere 0,8 µm bis 1,4 µm aufweisen. Heizwiderstände weisen vorzugsweise 1 bis 50 Ohm auf und neigen bei Verkleinerung der Bauteile zu niederen Werten. Bei den zurzeit gängigen Dimensionen der Bauteile sind 5 bis 20 Ohm bevorzugt. Temperatur-Messwiderstände weisen vorzugsweise 50 bis 10.000 Ohm auf und neigen bei Verkleinerung der Bauteile ebenso zu niederen Werten. Bei den zurzeit gängigen Dimensionen der Bauteile sind 100 bis 2.000 Ohm bevorzugt. Auf dem Temperaturchip ist der Temperaturmesswiderstand um ein Vielfaches größer als der Heizwiderstand. Insbesondere unterscheiden sich diese Widerstände um ein bis zwei Größenordnungen.

Um die Platin-Dünnfilm-Widerstände vor einem korrosiven Angriff durch das Messmedium zu schützen, hat es sich bewährt, wenn diese jeweils mit einer Passivierungsschicht bedeckt sind. Die Passivierungsschicht weist dabei vorzugsweise eine Dicke im Bereich von 10 µm bis 30 µm, insbesondere 15 µm bis 20 µm auf. Besonders bewährt hat sich eine Passivierungsschicht aus mindestens zwei unterschiedlichen Einzelschichten, insbesondere Einzelschichten aus Al₂O₃und Glaskeramik. Die Dünnschichttechnik eignet sich zum Erstellen der bevorzugten Schichtdicke der Al₂O₃-Schicht von 0,5 µm bis 5 µm, insbesondere 1 µm bis 3 µm.

Die Platin-Dünnfilm-Widerstände werden dabei vorzugsweise an dem dem Deckel oder Hohlkörper abgewandten Ende der Trägerplättchen angeordnet, um eine möglichst geringe thermische Beeinflussung der Platin-Dünnfilmwiderstände durch den thermisch trägen Deckel oder Hohlkörper zu gewährleisten.

Um eine gegenseitige Beeinflussung von Temperaturmesselement und Heizelement zu unterbinden, ist es von Vorteil, wenn der Platin-Dünnfilm-Widerstand des Heizelements weiter vom Deckel oder Hohlkörper entfernt angeordnet ist als der Platin-Dünnfilm-Widerstand des Temperaturmesselements. Dadurch sind die Platin-Dünnfilm-Widerstände des Heizelements nicht in der gleichen Strömungsfaser des Messmediums angeordnet wie die Platin-Dünnfilm-Widerstände des Temperaturmesselements.

Die bevorzugte Anordnung des Temperaturmesselements ist in der Strömungsrichtung vor dem Heizelement.

Vorzugsweise sind die Trägerplättchen des Heizelements und des Temperaturmesselements voneinander beabstandet, und zwar insbesondere parallel zueinander.

Es hat sich insbesondere zur Messung von Medien mit wechselnder Strömungsrichtung bewährt, wenn zwei Heizelemente und ein Temperaturmesselement oder zwei Temperaturmesselemente und ein Heizelement in einer Reihe angeordnet sind.

Es hat sich bewährt, die Trägerplättchen des Heizelements und des Temperaturmesselements in dem Deckel oder Hohlkörper beabstandet voneinander und parallel zueinander anzuordnen.

Mit dem erfindungsgemäßen Heißfilm-Anemometer wird eine Massendurchflussmessung gasförmiger oder flüssiger Medien in Rohrleitungen ermöglicht, insbesondere wenn die Trägerplättchen in der Strömungsrichtung des Mediums angeordnet sind.

Vorzugsweise sind die Trägerplättchen des Heizelements und des Temperaturmesselements voneinander beabstandet und zwar insbesondere in Serie zwischen gleichen Keramikfolien oder Teilen des Keramikbauteils angeordnet.

Dabei hat es sich bewährt, wenn das Keramikfolien-Laminat aus zwei Keramikfolien gebildet ist oder wenn das Keramikbauteil aus zwei Keramikrohren, deren Wandungen im Querschnitt jeweils ein Halbmondprofil aufweisen, gebildet ist.

Es hat sich insbesondere zur Messung von Medien mit wechselnder Strömungsrichtung bewährt, wenn ein Temperaturmesselement, zwei Heizelemente und ein Temperaturmesselement in Serie angeordnet sind.

Weiterhin haben sich Anordnungen bewährt, bei welchen das Keramikfolien-Laminat aus drei Keramikfolien gebildet ist.

Dabei hat es sich insbesondere bewährt, wenn die Trägerplättchen des Heizelements und des Temperaturmesselements durch Keramikfolien beabstandet voneinander und parallel zueinander angeordnet sind.

Es ist bevorzugt, ein Heizelement zwischen einer ersten und einer zweiten Keramikfolie und ein Temperaturmesselement zwischen der zweiten und einer dritten Keramikfolie der drei Keramikfolien anzuordnen, wobei das Heizelement und das Temperaturmesselement auf gleicher Höhe des Keramikfolien-Laminats nebeneinander angeordnet sind.

Außerdem hat es sich bewährt, wenn ein Heizelement zwischen einer ersten und einer zweiten Keramikfolie der drei Keramikfolien angeordnet ist und dass zwei Temperaturmesselemente zwischen der zweiten und einer dritten Keramikfolie der drei Keramikfolien angeordnet sind, wobei das Heizelement zwischen den Temperaturmesselementen angeordnet ist.

Weiterhin haben sich Anordnungen bewährt, bei welchen das Keramikfolien-Laminat aus vier Keramikfolien gebildet ist.

Dabei ist es bevorzugt, wenn ein erstes Temperaturmesselement zwischen einer ersten und einer zweiten Keramikfolie der vier Keramikfolien und ein zweites Temperaturmesselement zwischen einer dritten und einer vierten Keramikfolie der vier Keramikfolien angeordnet ist und dass ein Heizelement zwischen der zweiten und der dritten Keramikfolie angeordnet ist, wobei das Heizelement und die Temperaturmesselemente auf gleicher Höhe des Keramikfolien-Laminats nebeneinander angeordnet sind.

Weiterhin ist es bevorzugt, wenn ein erstes Temperaturmesselement zwischen einer ersten und einer zweiten Keramikfolie der vier Keramikfolien und ein zweites Temperaturmesselement zwischen einer dritten und einer vierten Keramikfolie der vier Keramikfolien angeordnet ist und dass ein Heizelement zwischen der zweiten und der dritten Keramikfolie angeordnet ist, wobei die Temperaturmesselemente auf gleicher Höhe des Keramikfolien-Laminat nebeneinander angeordnet sind und das Heizelement versetzt zu den Temperaturmesselementen angeordnet ist.

Die Verwendung eines erfindungsgemäßen Heißfilm-Anemometers zur Massendurchflussmessung gasförmiger oder flüssiger Medien durch Rohrleitungen, wobei die Trägerplättchen parallel zur Strömungsrichtung des Mediums angeordnet sind, ist ideal.

Dabei eignet sich das erfindungsgemäße Heißfilm-Anemometer insbesondere zur Messung an gasförmigen Medien mit einer Temperatur im Bereich von - 40°C bis + 800°C, wie sie beispielsweise das Abgas einer Verbrennungskraftmaschine aufweist.

Die Selbstreinigung durch Aufheizen des Temperaturmesselements ist besonders für im Abgasbereich von Verbrennungsmotoren insbesondere Dieselmotoren angeordnete Sensoren geeignet. Verrußte Sensoren werden durch erhitzen, insbesondere Ausglühen schnell wieder voll funktionsfähig. Dabei lässt sich diese Selbstreinigung während der Lebensdauer eines Motors beliebig oft wiederholen.

Die Anordnung von mehreren Temperaturmesselementen und Heizelementen an dem Trägerelement ermöglicht in idealer Weise auch die Erkennung der Strömungsrichtung bzw. von Strömungsrichtungsänderungen eines Mediums. Insofern ist es vorteilhaft, das erfindungsgemäße Heißfilm-Anemometer zur Messung an Medien mit sich in zeitlichen Abständen ändernder Strömungsrichtung einzusetzen.

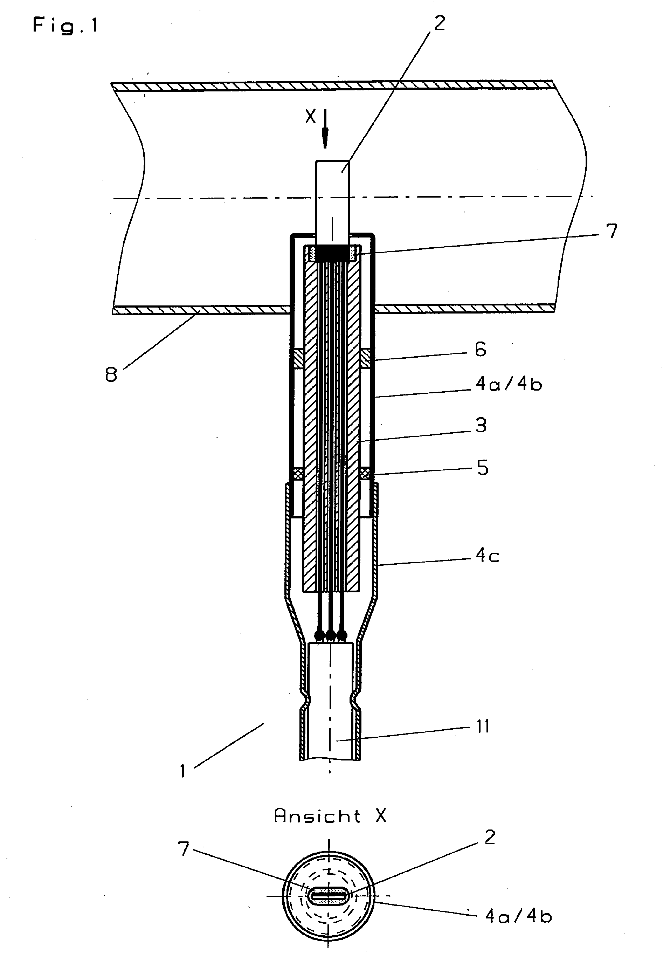

Der Gegenstand der Erfindung ist nachfolgend anhand der Figuren 1 bis näher erläutert.
- Figur 1: zeigt einen Längsschnitt durch eine anemometrische Messeinrichtung mit dazugehöriger Draufsicht
- Figur 2: zeigt die Anordnung von Figur 1 in einer dreidimensionalen Explosions- darstellung
- Figur 3: zeigt einen Längsschnitt durch eine anemometrische Messeinrichtung

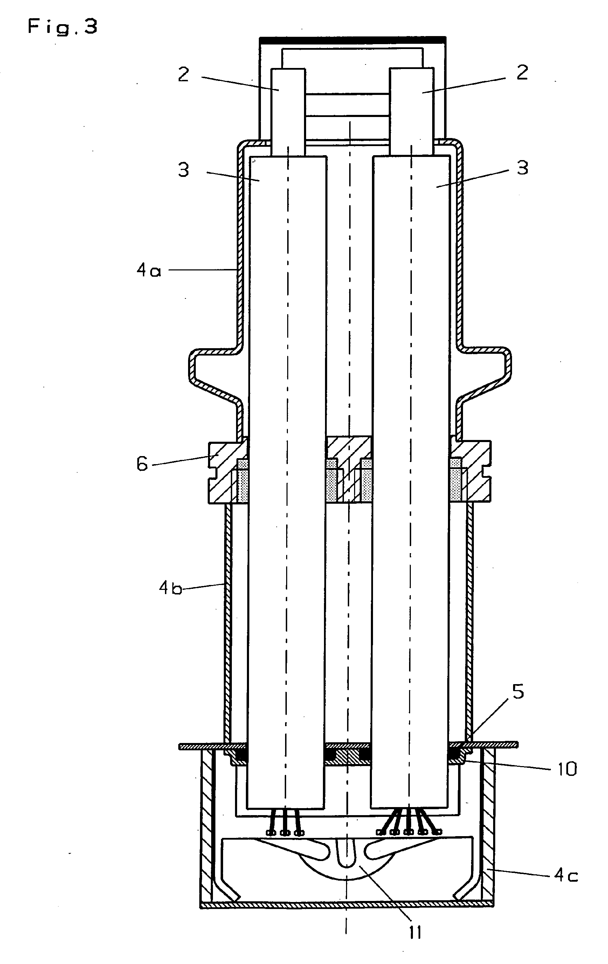

- Figur 3: zeigt eine bevorzugte anemometrische Messeinrichtung mit je einem Träger pro Schichtwiderstand

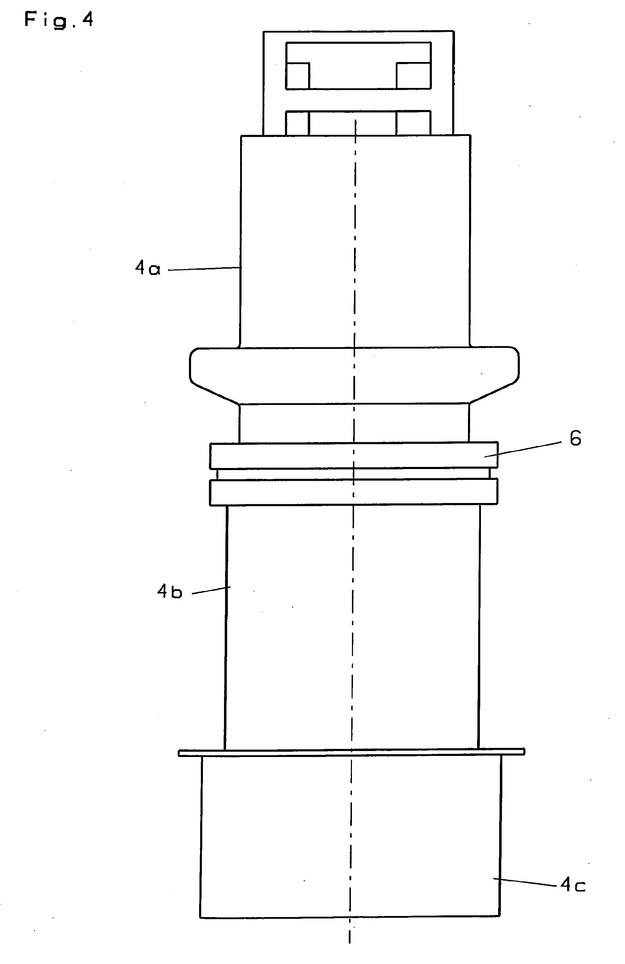

- Figur 4: ist die Außenansicht von Figur 3

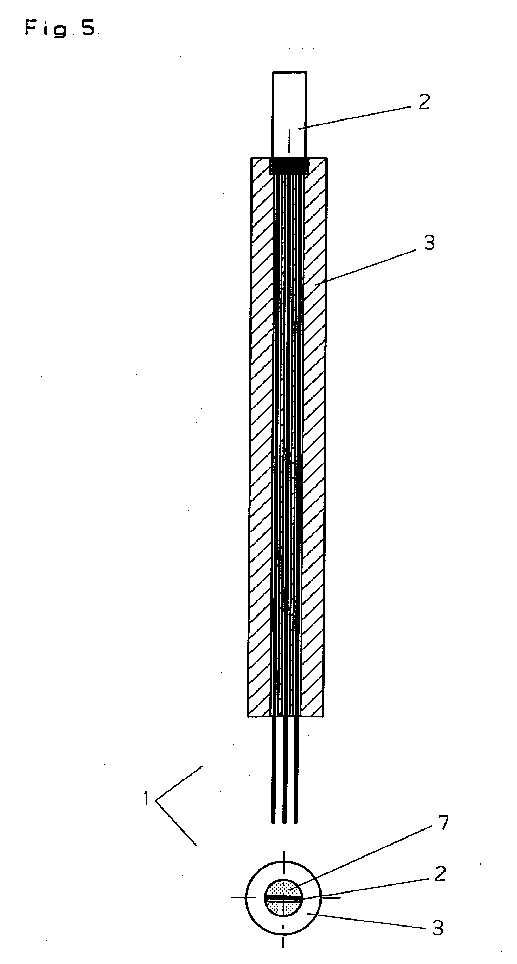

- Figur 5: zeigt einen Träger aus Figur 3

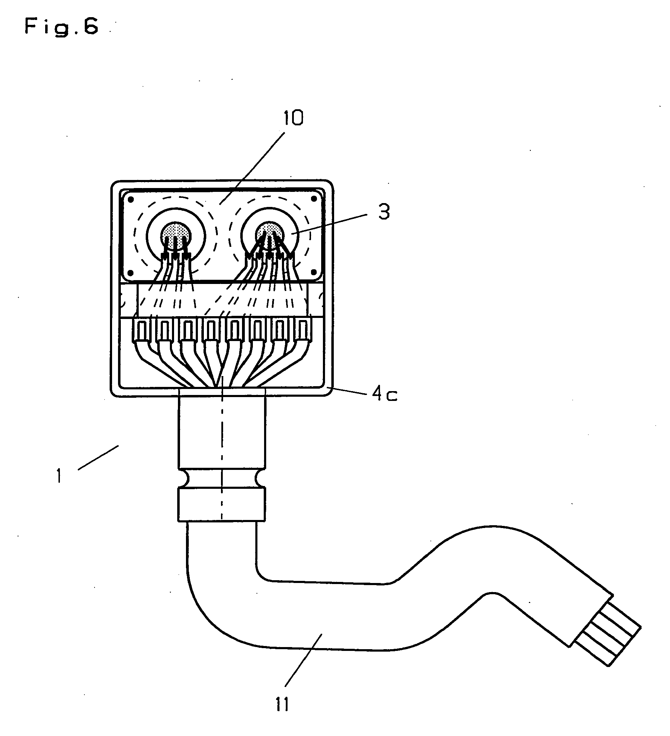

- Figur 6: zeigt den Anschlussbereich von Figur 3

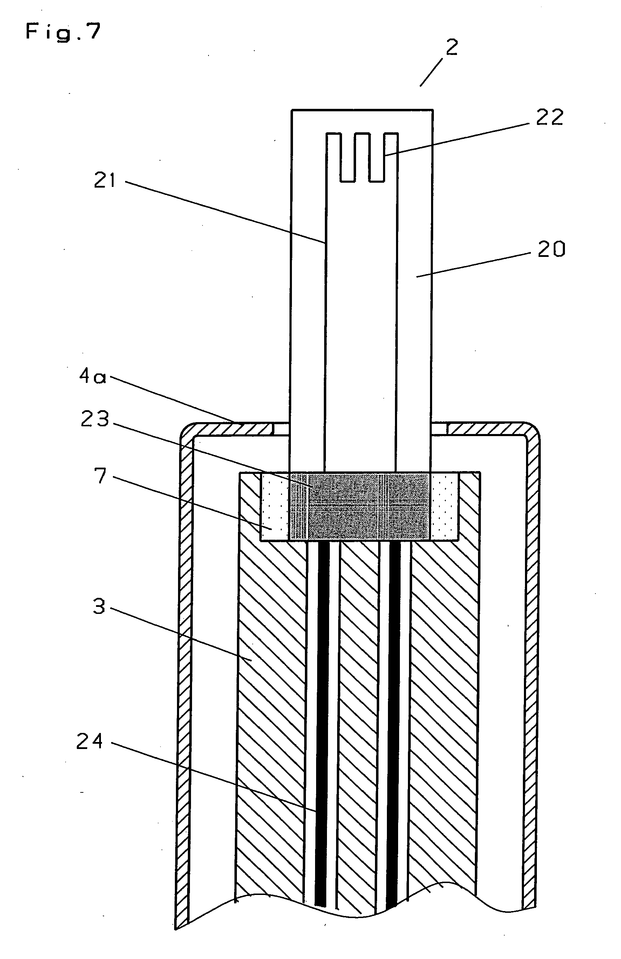

- Figur 7: zeigt einen Schichtwiderstand und dessen Abdichtung im heißen Bereich der Messeinrichtung

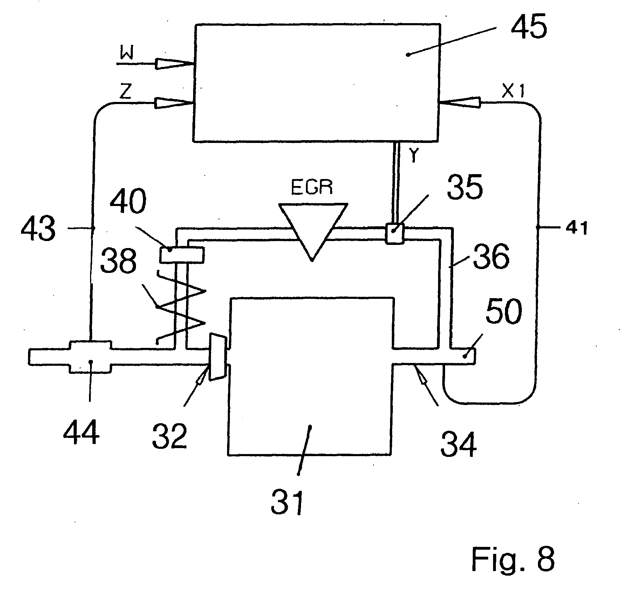

- Figur 8: zeigt schematisch den Aufbau eines Regelkreises für eine Brennkraft-Maschine mit Abgasrückführung;

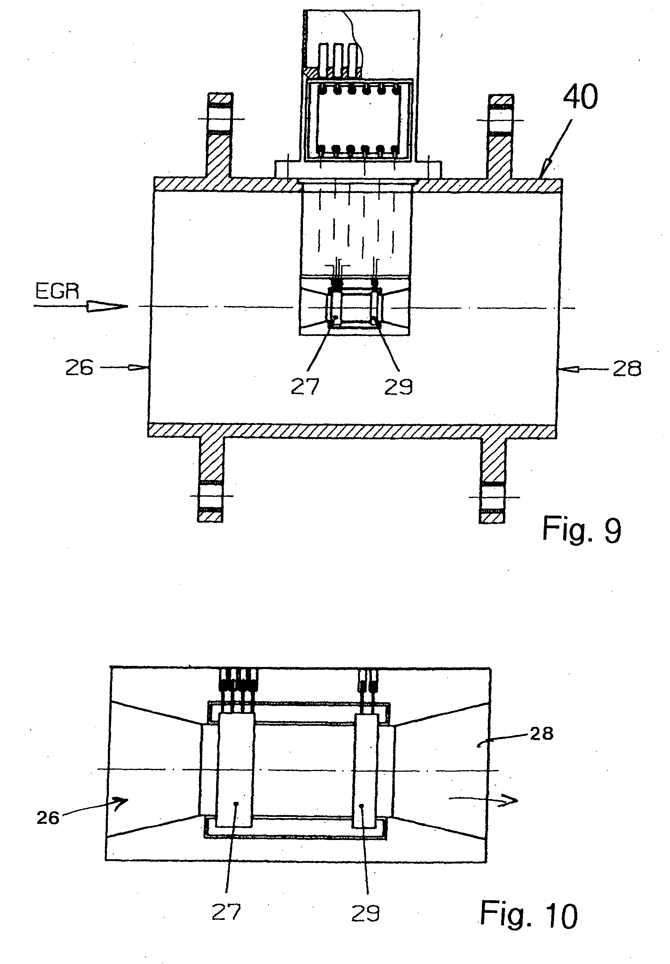

- Figur 9: zeigt das Heißfilm-Anemometer für die Abgasrückführung im Längsschnitt;
- Figur 10: stellt das eigentliche Heißfilm-Anemometer dar;

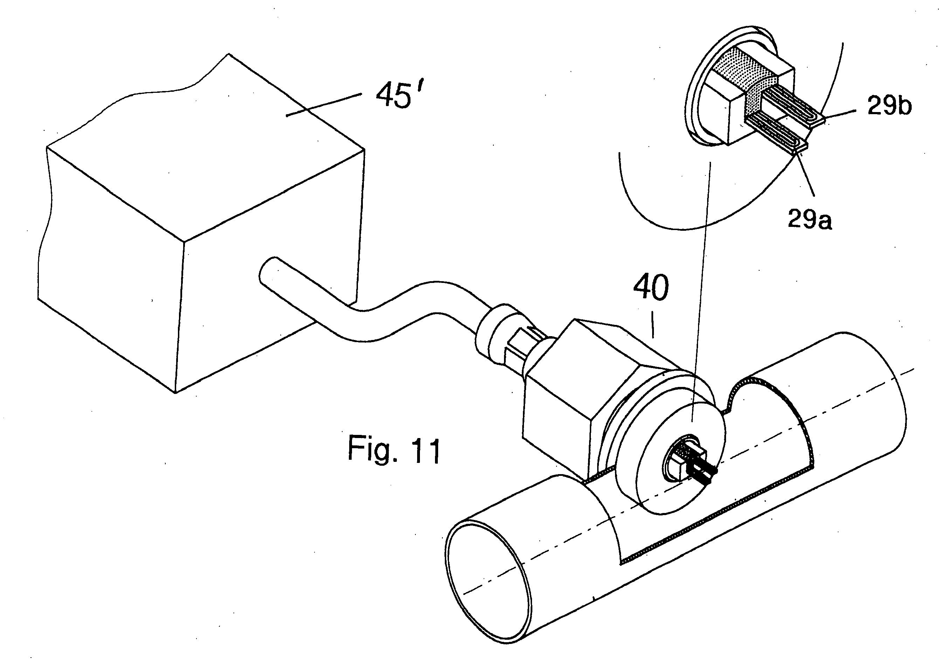

- Figur 11: zeigt in einer ausschnittsweisen Vergrößerung des Strömungskanals für die Abgasrückführung mit dem eigentlichen Messelements;

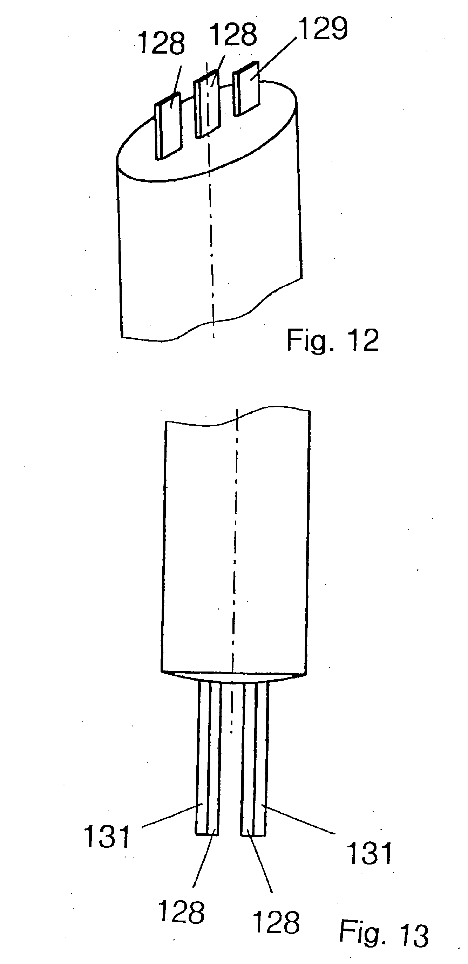

- Figur 12: zeigt ein Heißfilm-Anemometer mit Strömungsrichtungserkennung;
- Figur 13: zeigt ein Heißfilm-Anemometer mit zwei thermisch entkoppelten Heizern.

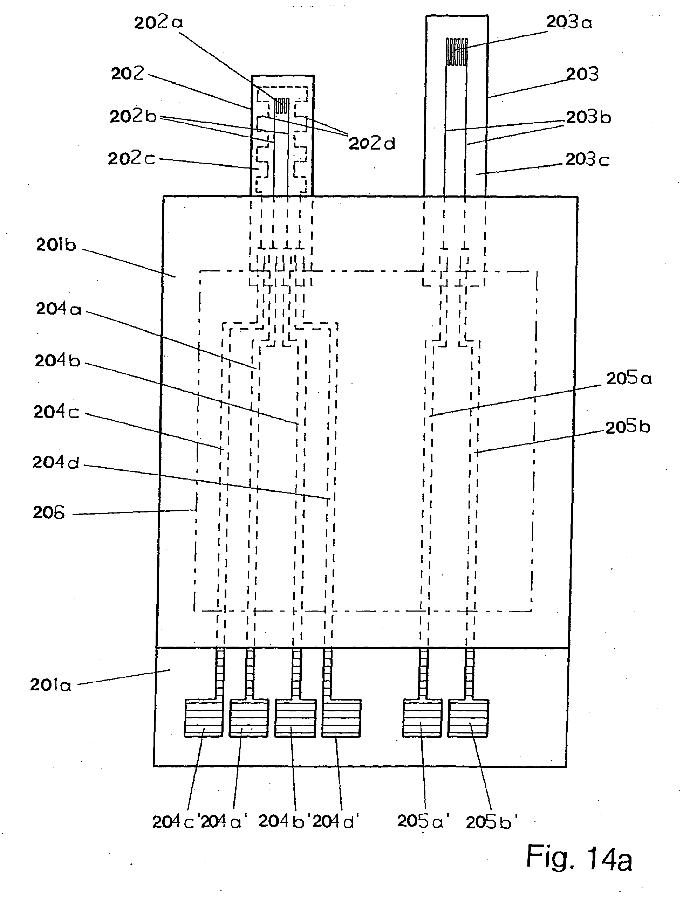

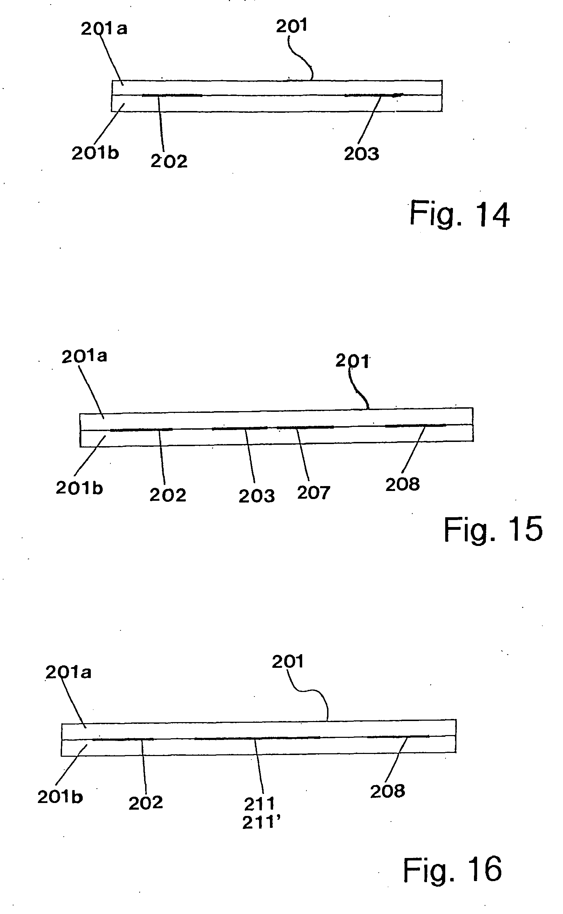

- Figur 14: zeigt ein Heißfilm-Anemometer mit zweischichtigem Keramikfolien-Laminat und einem Temperaturmesselement und einem Heizelement (Draufsicht von Fig. 14a);
- Figur 14a: zeigt das Heißfilm-Anemometer aus Fig. 14 in Seitenansicht;

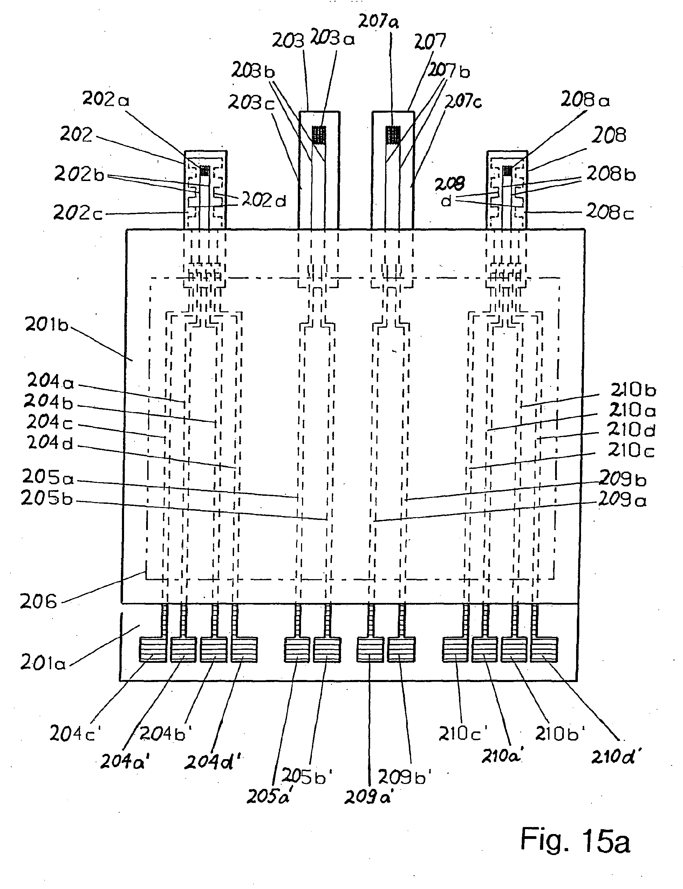

- Figur 15: zeigt ein Heißfilm-Anemometer mit zweischichtigem Keramikfolien-Laminat und zwei Temperaturmesselementen und zwei Heizelementen (Draufsicht von Fig. 5a);
- Figur 15a: zeigt das Heißfilm-Anemometer aus Fig. 15 in Seitenansicht;

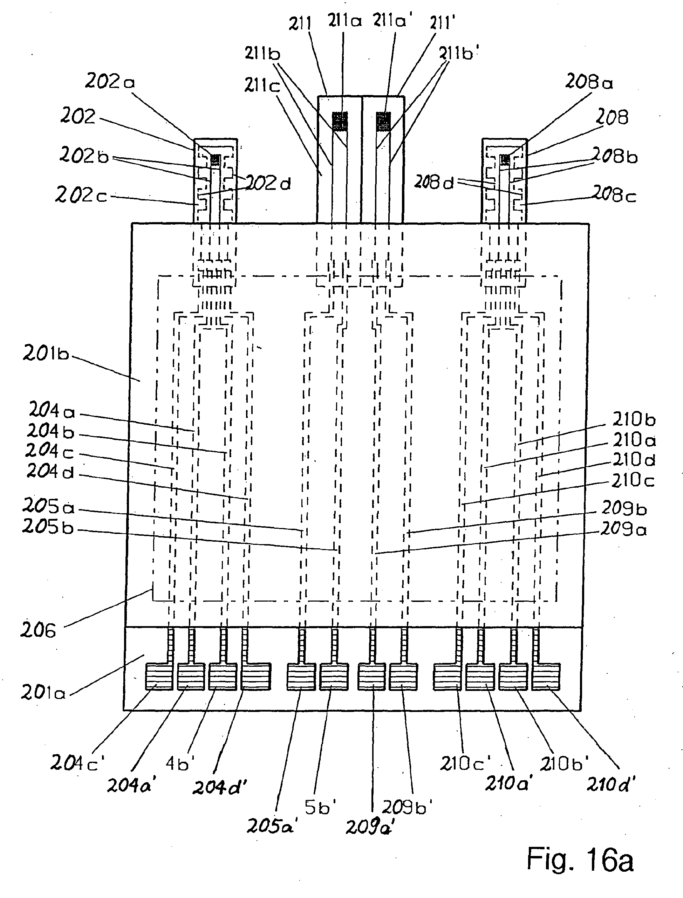

- Figur 16: zeigt ein Heißfilm-Anemometer mit zweischichtigem Keramikfolien-Laminat und zwei Temperaturmesselementen und einem Doppelheizelement (Draufsicht von Fig. 16a);
- Figur 16a: zeigt das Heißfilm-Anemometer aus Fig. 16 in Seitenansicht;

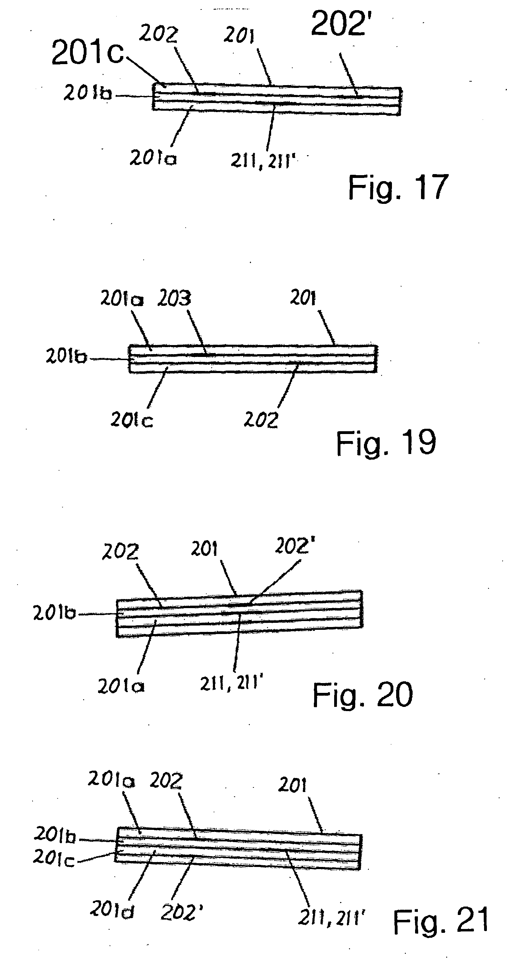

- Figur 17: zeigt ein Heißfilm-Anemometer mit dreischichtigem Keramikfolien-Laminat, zwei Temperaturmesselementen und einem Doppelheizelement in Draufsicht;

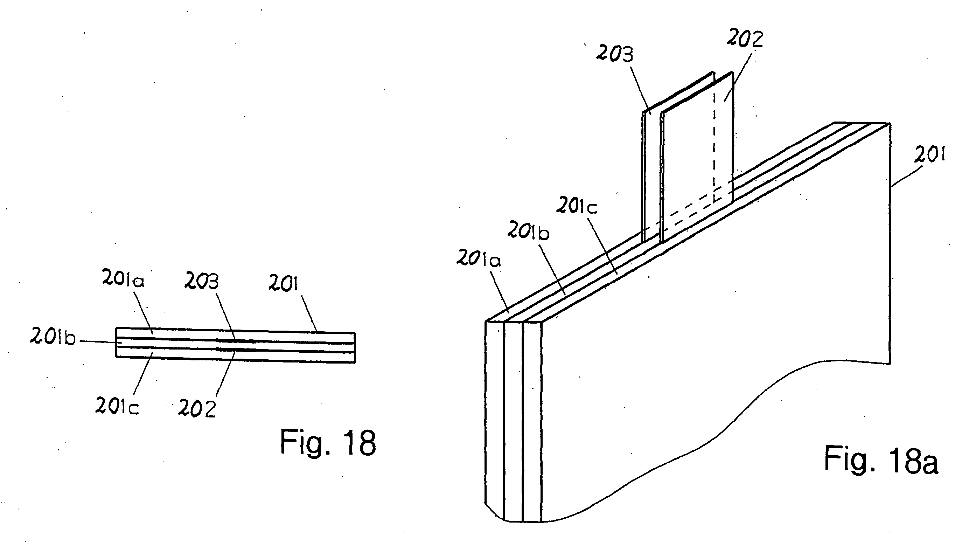

- Figur 18: zeigt ein Heißfilm-Anemometer mit dreischichtigem Keramikfolien-Laminat, einem Temperaturmesselement und einem Heizelement in Draufsicht;
- Figur 18a: zeigt das Heißfilm-Anemometer aus Fig. 18 in perspektivischer Sicht;

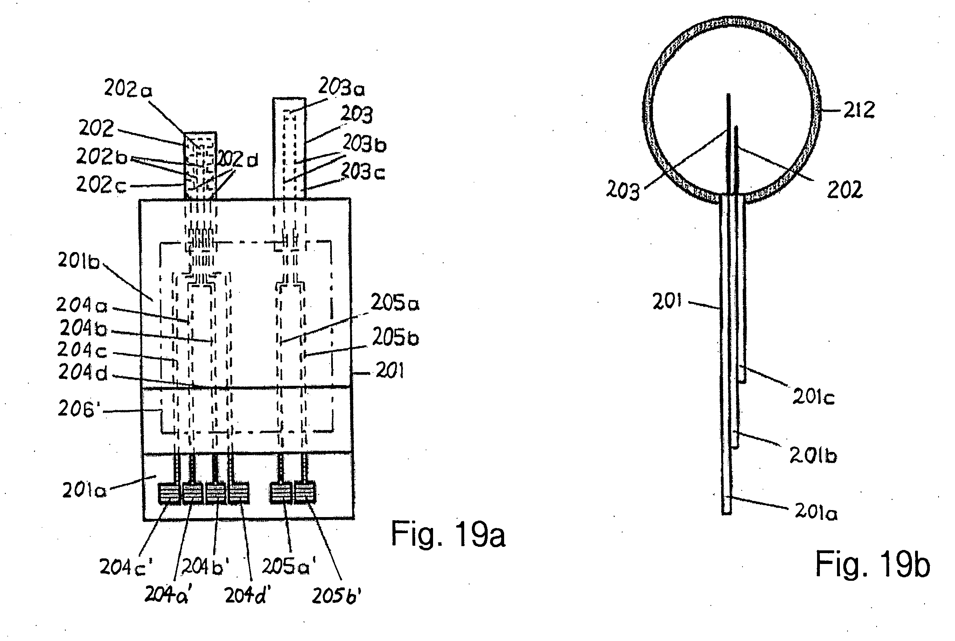

- Figur 19: zeigt ein Heißfilm-Anemometer mit dreischichtigem Keramikfolien-Laminat, einem Temperaturmesselement und einem Heizelement in Draufsicht;
- Figur 19a: zeigt das Heißfilm-Anemometer aus Fig. 19 in Seitenansicht;
- Figur 19b: zeigt das Heißfilm-Anemometer aus Fig. 19a in Seitenansicht;
- Figur 20: zeigt ein Heißfilm-Anemometer mit vierschichtigem Keramikfolien-Laminat, zwei Temperaturmesselementen und einem Doppelheizelement in Draufsicht;
- Figur 21: zeigt ein Heißfilm-Anemometer mit vierschichtigem Keramikfolien-Laminat, zwei Temperaturmesselementen und einem Doppelheizelement in Draufsicht;

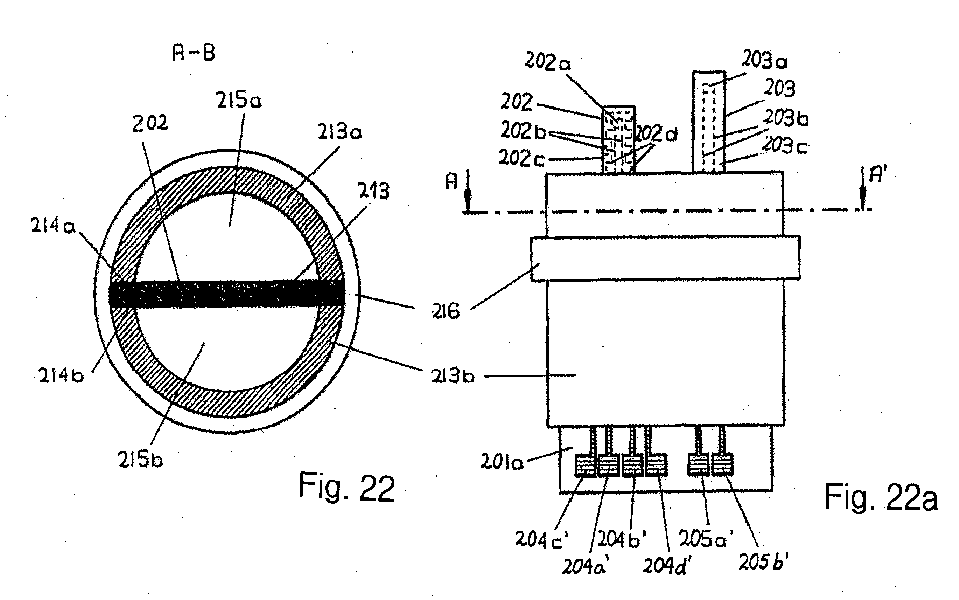

- Figur 22: zeigt ein Heißfilm-Anemometer mit mehrteiligem Keramikbauteil, einem Temperaturmesselement und einem Heizelement im Querschnitt A - A' (siehe Fig. 12a);
- Figur 22a: zeigt das Heißfilm-Anemometer aus Fig. 22 in Seitenansicht;

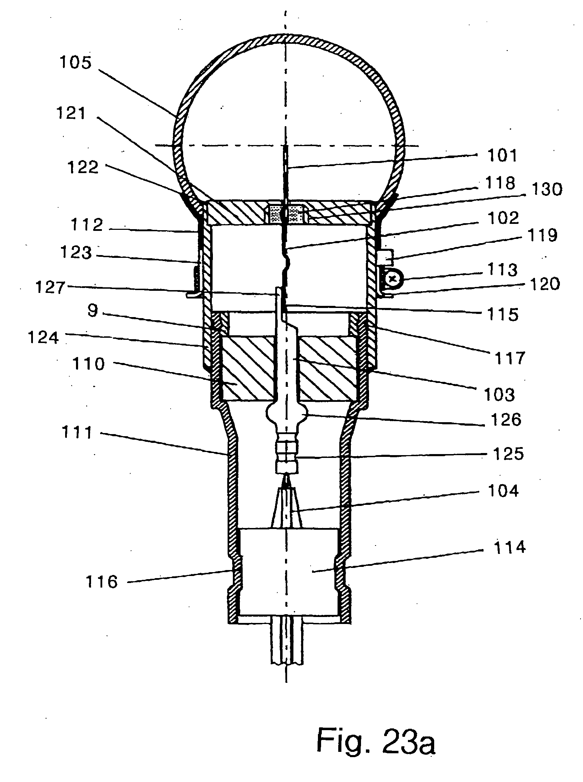

- Figur 23a: zeigt ein Heißfilm-Anemometer mit in einer Metallscheibe angeordnetem Heiz- und Temperaturmesselement;

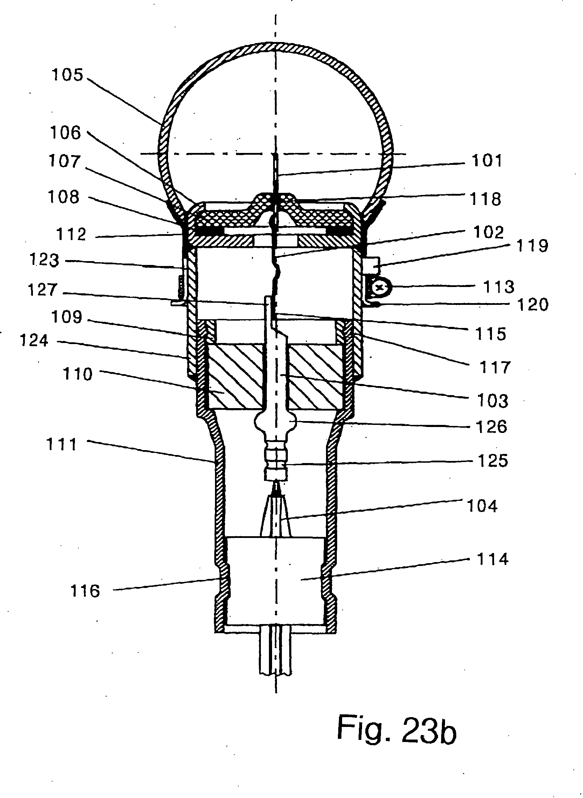

- Figur 23b: zeigt ein Heißfilm-Anemometer mit in einer Keramikscheibe angeordnetem Heiz- und Temperaturmesselement;

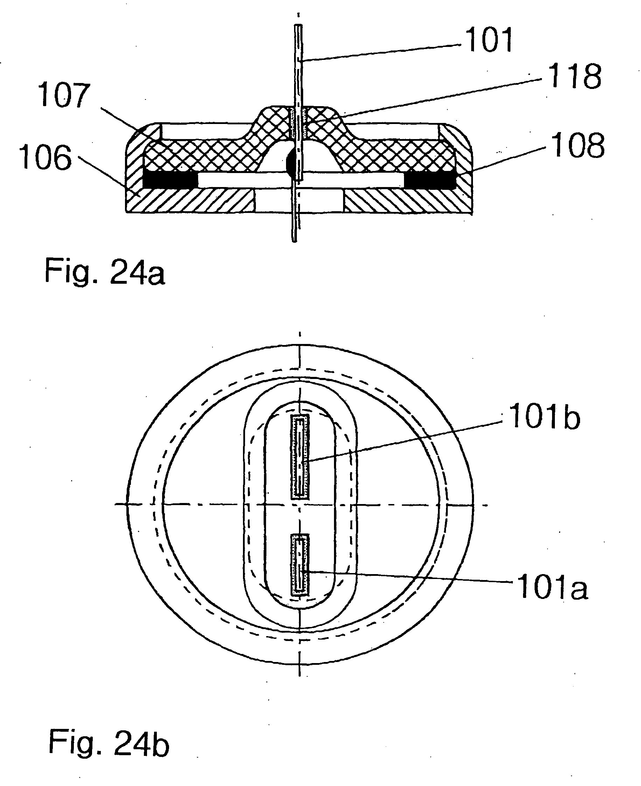

- Figur 24a: zeigt einen Ausschnitt gemäß Fig. 14 oder 15 betreffend eine Anordnung von Schichtwiderständen in einer Keramikscheibe;
- Figur 24b: zeigt den Ausschnitt gemäß Fig. 16a in Draufsicht;

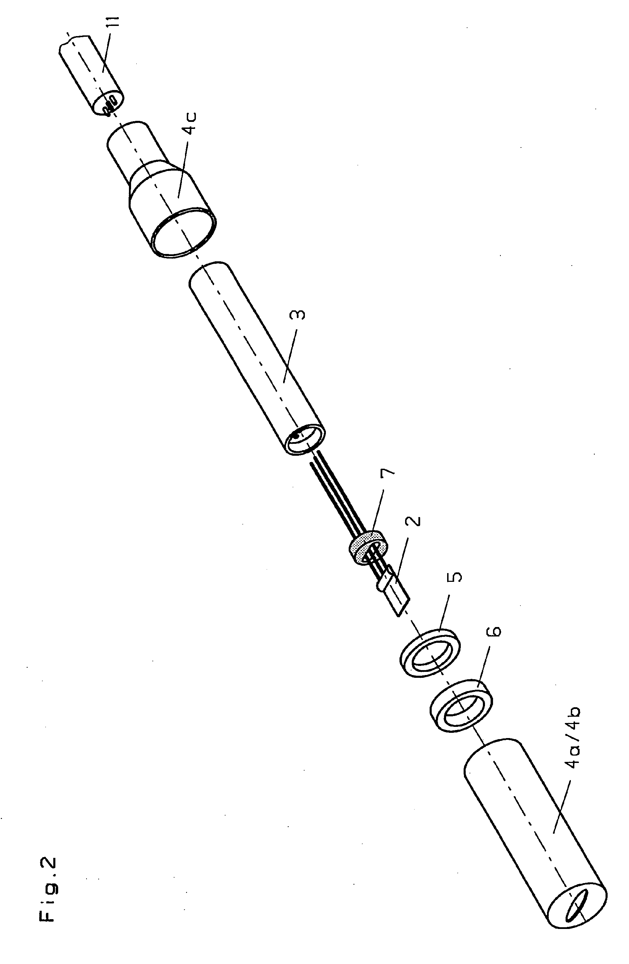

Gemäß einer einfachen anemometrischen Messeinrichtung gemäß Figur 1 und Figur 2 ist ein Schichtwiderstand 2 in einem Träger 3 mit Glaslot oder keramischem Verguss befestigt. Der Verguss bzw. das Glaslot dichten den Träger luftdicht zum Substrat des Schichtwiderstands ab, insbesondere im Bereich des Fixierungstropfens. Der Träger 3 ist an dem dem Messwiderstand entgegengesetzten Ende gegen ein Metallgehäuse 4a mit einer Dichtung 5 aus einem Elastomer abgedichtet. Das abgedichtete Ende des Trägers 3 gegen das Metallgehäuse 4a ist im Gebrauch so weit vom Abgasrohr entfernt, dass dieses kühle Ende des Anemometers während des Betriebszustandes sich nicht so weit erhitzt, dass der als Dichtung 5 verwendete elastomere Werkstoff seine Zweckbestimmung verliert. Das metallische Gehäuse 4 ist gleichzeitig eine Abschirmung 4a gegen Hitze durch den zwischen dem metallischen Gehäuse 4 und dem Träger 3 verbleibenden Luftspalt. Eine Luftspaltisolierung zwischen dem metallischen Gehäuse 4 und dem Träger 3 wird mit einem Abstandshalter 6 beabstandet, der außerhalb des Abgasrohres 8 das Gehäuse 4 zum Träger 3 beabstandet, nicht jedoch abdichtet. Dieser Abstandshalter 6 kühlt den im Abgasrohrinneren aufgeheizten Träger 3 über Wärmeabfluss außerhalb des Abgasrohres 8. Der Schichtwiderstand 2 (Chip) wird im Bereich des Substrats mit einer Kappe 4c, die einen Schlitz aufweist, teilweise abgedeckt, so dass lediglich der Bereich des Messwiderstands des Schichtwiderstands deutlich aus dem Schlitz der Kappe ragt, um im Abgasstrom angeordnet zu werden. der Fixierungstropfen auf dem Substrat und ein Teil der Leiterbahnen, die zum Messwiderstand führen, werden durch die Kappe 4c thermisch abgeschirmt.

Das heiße Abgas kann somit durch den Schlitz der Kappe in den Spalt zwischen dem Träger 3 und der Abschirmung 4 bis an die Dichtung 5 diffundieren, jedoch nicht fließen. Aus diesem Grund erhitzt sich das außerhalb des Abgasrohres beabstandete kalte Ende der anemometrischen Messeinrichtung nicht so sehr, dass ein elastomeres Dichtungsmittel zerstört würde. Das kalte Ende befindet sich zwischen den außerhalb des Abgasrohres befindlichen Gehäuseteilen 4b und 4c. Der Gehäuseteil 4c bildet den Gehäusebereich 4c für den Kabelanschluss zu den Anschlussdrähten des Schichtwiderstands 2, die durch den Träger 3 geführt werden. Der Gehäuseteil 4b ist für die Abdichtung des Trägers 3 gegen das Gehäuse 4 erforderlich.

Figur 3 ist eine bevorzugte Ausführung einer anemometrischen Messeinrichtung mit einem als Heizer ausgebildeten Schichtwiderstand 2 und einem als Temperaturmesselement ausgebildeten Schichtwiderstand 2. Beide Schichtwiderstände 2 sind jeweils mit einer Dichtungsmasse, beispielsweise Vergussmasse, Glas oder Glaskeramik jeweils in einem Träger 3 befestigt. Der Träger 3 ist luftdicht gegen die Schichtwiderstände 2 abgedichtet. Ein derartiger keramischer Träger 3 ist in Figur 5 ersichtlich. Die keramischen Träger 3 sind als keramische Rohre, insbesondere keramische Mehrloch-Kapillarrohre, ausgebildet und jeweils an ihrem dem Messwiderstand des Chips 2 entgegengesetzten Ende mit einer elastomeren Masse 5 gegen ein metallisches Gehäuse 4 abgedichtet. Zwischen den Trägern 3 und dem metallischen Gehäuse 4 befinden sich weiterhin ein Luftspalt und ein luftdurchlässiger Abstandshalter 6. Der Abstandshalter 6 ist so angeordnet, dass er im Betriebszustand außerhalb des Abgasrohres 8 von diesem beabstandet ist. Der Abstandshalter 6 kühlt die keramischen Trägerrohre 3 über Wärmeabfluss an das Gehäuse 4.

Der für die Messung relevante funktionelle Bereich des Schichtwiderstands 2 ragt durch Schlitze einer Kappe 4a, die den Schichtwiderstand im Übrigen verkleidet.

Heiße Luft außerhalb der Schichtwiderstände kann durch Schlitze der die Schichtwiderstände weitgehend abdeckenden Kappe 4c bis zur Dichtung des keramischen Trägers mit dem Metallgehäuse 4 diffundieren, nicht jedoch fließen.

Figur 4 zeigt das Gehäuse 4 untergliedert in den in das Abgasrohr ragenden Gehäuseteil 4a, dessen Funktion eine Abdeckkappe 4a bzw. thermische Abschirmung 4a ist. Dabei wird der Träger 3 von der Hitze des Mediums abgeschirmt. Der außerhalb des Abgasrohres angeordnete Teil des Gehäuses 4b ist durch Abstandshalter 6 vom Träger 3 beabstandet, wobei die Abstandshalter 6 gemäß Figur 4 als Kühlrippen ausgebildet sind, um die Kühlung des Trägers 3 durch Wärmefluss über die Abstandshalter 6 zu verbessern.

Das Gehäuseteil 4c umgibt den Kabelanschluss. Zwischen den Teilen 4b und 4c des Gehäuses ist die Dichtung 5 angeordnet, die das Gehäuse 4 gegen den Träger 3 luftdicht mit einem Elastomer abdichtet. Die elastomere Dichtung 5 wird in eine Halterung 10 eingelegt.

Figur 6 zeigt den Kabelausgang des Gehäuses 4c, bei dem die Adern eines Kabels 11 mit den Anschlussdrähten der Schichtwiderstände 2 verbunden sind.

Figur 7 zeigt einen Schichtwiderstand 2, auf dessen Substrat 20 aus Aluminiumoxidkeramik eine Leiterbahn 21 zu einem Mäander 22 führt, der als Messwiderstand oder Heizwiderstand ausgebildet sein kann. Die Anschlussdrähte 24 an die Leiterbahnen 21 sind mit einem Fixiertropfen 23 aus Glas oder Glaskeramik fixiert. Der Schichtwiderstand 2 ist mit einem Glaslot 7 gegen den Träger 3 abgedichtet und befestigt. Die Kappe 4a schützt die Abdichtung und den Träger vor Thermoschocks und hoher thermischer Belastung. Die Leiterbahn 21 verbindet elektrisch den wegen der thermischen Entkopplung deutlich außerhalb der Abschirmung 4a befindlichen Mäander 22 und den von der Abschirmung 4 abgeschirmten Bereich des Schichtwiderstands 2.

Gemäß Figur 8 weist die Brennkraft-Maschine 31 einen mit Aufladung versehenen Eintrittsbereich 32 für anströmende Luft und zurückgeführtes Abgas auf; weiterhin ist auf der Abgasseite der Maschine ein Austrittsbereich 34 vorgesehen, von dem aus ein Teil des Abgases in einen Strömungskanal 36 zur Abgasrückführung geführt wird, der mit einem steuerbaren Ventil 35, einer Abgas-Kühlvorrichtung 38 sowie einem Heißfilm-Anemometer 40 versehen ist. Das Heißfilm-Anemometer 40 misst die Menge des zurückgeführten Abgases. Das steuerbare Ventil 35 dient zur Regelung des Abgas-Partialdruckes zwecks Einstellung eines spezifischen Mengenverhältnisses zwischen frisch anströmender Luft und der Menge des partiell zurückgeführten Abgases; das steuerbare Ventil 35 wird von einem Regler 45 mittels eines Stellsignals Y angesteuert. Der Strömungskanal 36 für die Abgas-Rückführung endet in einer als Mischkammer ausgebildeten Einmündung einer Frischlufteinleitung im Eintrittsbereich 32 der Maschine 31, wobei zur Messung anströmender Frischluft ein zusätzlicher Strömungsmengen-Sensor 44 optional ist.

Der im Austrittsbereich 34 der Maschine 31 in die Rückführung zu Strömungskanal 36 abgezweigte Teil des Abgases durchströmt somit nacheinander Ventil 35, Kühlvorrichtung 38 und Heißfilm-Anenometer 40. Das rückgeführte Abgas trifft in der Einmündung auf die einströmende Luft der Frischluft-Einleitung, nachdem diese ggf. den optionalen Massenstromsensor 44 durchlaufen hat.

Das Gemisch aus anströmender Luft und Abgas wird einer Ladevorrichtung mit Kompressor zugeführt, die vorzugsweise als Abgas-Turbolader ausgebildet ist, wobei die zugehörige Antriebsturbine im Austrittsbereich 34 zwecks besserer Übersicht nicht dargestellt ist.

Der nicht zur Rückführung vorgesehene Teil des Abgases gelangt über eine Leitung 50 - und ggf. eine Reinigungseinrichtung - ins Freie, wobei die Durchschnitts-Temperatur des Abgases bei ca. 400°C bis 700°C liegt.

Weiterhin kann sich im Bereich des Abgas-Austrittsbereiches 34 ein Temperatur-Sensor zur Messung der Abgastemperatur befinden. Der hier symbolisch dargestellte Regler 45 erhält über Leitung 41 ein der Abgastemperatur entsprechendes Signal X1 und über Leitung 43 ein Signal Z, entsprechend der vom optionalen Strömungsmengen-Sensor 44 gemessenen Menge der anströmenden Frischluft; da diese Menge der anströmenden Frischluft normalerweise nicht verstellbar ist, wird diese durch das in der Regelungstechnik für Störgrößen verwendete Symbol Z dargestellt.

Figur 9 zeigt im Längsschnitt das Heißfilm-Anemometer 40, wobei zusätzlich elektrische Anschlussverbinder oberhalb des im Längsschnitt dargestellten Sensorgehäuses erkennbar sind. Der Eingangsbereich ist mit Zeichen 26, der Ausgangsbereich mit Zeichen 28 versehen.

In Figur 10 ist das Heißfilm-Anemometer 40 im Längsschnitt vergrößert dargestellt, wobei im Eingangsbereich 26 ein heizbares Messelement 27, insbesondere ein Dünnschichttemperatursensor mit Heizer erkennbar ist, während im Austrittsbereich 28 Heizelement 29 erkennbar ist.

In Figur 11 ist das Heißfilm-Anemometer 40 im Ausschnitt des Strömungskanals 6 nach dem Zwei- oder Mehrheizerprinzip dargestellt. In dieser Figur sind zwei Heizelemente 29a, 29b als Mikroheizer zu erkennen. Der zugehörige Regler ist als Teil der bruchstückhaft dargestellten Motorsteuer-Elektronik ausgebildet, die hier mit Zeichen 15' versehen ist.

In einer Ausführung des Heißfilm-Anemometers ist das Heizelement als Heizleistungssensor ausgebildet und das Temperaturmesselement als Temperatursensor, das zusätzlich einen Heizleiter zum Freiglühen tragen kann.

Nach Fig. 12 sind hierzu zwei Heizleistungssensoren 128 zur Richtungserkennung der Medienströmung angeordnet. Das anemometrische Messprinzip funktioniert prinzipiell so, dass das Temperaturmesselement die Medientemperatur genau erfasst. Der oder die beiden Heizelemente des/der Heizleistungssensoren 128 werden dann auf konstanter Übertemperatur zum Temperatursensor 129 durch eine elektrische Schaltung gehalten. Der zu messende Gas- bzw. Flüssigkeitsstrom kühlt den bzw. die Heizelemente des/der Heizleistungssensoren mehr oder weniger ab.

Zur Aufrechterhaltung der konstanten Übertemperatur muss die Elektronik bei Massenfluss entsprechend Strom an den/die Heizelemente nachliefern; dieser erzeugt an einem genauen Messwiderstand eine Spannung, die mit dem Massenfluss korreliert und auswertbar ist. Die zweifache Anordnung des Heizleistungssensors 128 oder Temperatursensors 129 erlaubt hierbei die Richtungserkennung des Massenflusses.

Dagegen sind nach Fig. 13 in einer Ausführung als Rußsensor zwei Heizleistungssensoren parallel gegenüberliegend in ein Rohrgehäuse gesteckt.

Die beiden Heizleistungssensoren 128 sind hierbei noch jeweils mit einem aufgeglasten Keramikplättchen 131 versehen.

In der angegebenen Anordnung wird ein Heizleistungssensor oberhalb der pyrolytischen Veraschungstemperatur betrieben; d.h. bei ca. 500°C. Der zweite Heizleistungssensor wird hierbei in einem niedrigeren Temperaturbereich von 200 - 450°C, bevorzugt von 300 - 400°C betrieben. Bei Rußablagerung auf diesem zweiten Heizleistungssensor wirkt diese Ablagerungsschicht als thermische Isolation und Veränderung der IR-Abstrahleigenschaften im Sinne eines zunehmend Schwarzen Körpers.

Dies kann in einer Referenzmessung zum ersten Heizleistungssensor elektronisch ausgewertet werden.

Figur 14 zeigt ein Heißfilm-Anemometer mit einem Keramikfolien-Laminat 201, das aus einer ersten Keramikfolie 201 a aus Al₂O₃ und einer zweiten Keramikfolie 201 b aus Al₂O₃ gebildet ist. In Serie zwischen der ersten Keramikfolie 201 a und der zweiten Keramikfolie 201 b sind ein Temperaturmesselement 202 und ein Heizelement 203 teilweise eingebettet und elektrisch kontaktiert. Ermöglicht wird eine Messung des Massendurchflusses nach dem Prinzip des Heißfilm-Anemometers. Das Heizelement 203 wird dabei durch eine elektrische Regelschaltung (Brückenschaltung und Verstärker in einem Regelkreis) entweder auf einer konstanten Temperatur (z.B. von 450°C) oder einer konstanten Temperaturdifferenz (z.B. von 100 K) zum Temperaturmesselement 202 gehalten. Eine Änderung im Massenfluss des Mediums ruft nun eine Änderung der Leistungsaufnahme des Heizelementes 203 hervor, die elektronisch auswertbar ist und in direkten Bezug zum Massenfluss steht.

Figur 14a zeigt das Heißfilm-Anemometer aus Fig. 14 in Seitenansicht. Dabei ist erkennbar, dass das Temperaturmesselement 202 und das Heizelement 203 über elektrische Leiterbahnen 204a, 204b, 204c, 204d, 205a, 205b mit Anschlussflächen 204a', 204b',204c', 204d', 205a', 205b' elektrisch kontaktiert sind. Die elektrischen Leiterbahnen 204a, 204b, 204c, 204d, 205a, 205b sind auf der ersten Keramikfolie 201 a angeordnet und teilweise von der zweiten Keramikfolie 201 b bedeckt. Daher ist ihre Lage teilweise gestrichelt angedeutet. Das Temperaturmesselement 202 weist ein Trägerplättchen 202c bestehend aus einer Einzelschicht aus Al₂O₃ auf. Ein Platin-Dünnfilmelement 202a zur Temperaturmessung und 202d zum Ausheizen und elektrische Anschlussleitungen 202b sind auf der Rückseite des Trägerplättchen 202c inklusive elektrisch isolierender Beschichtung angeordnet und deren Lage daher gestrichelt dargestellt. Das Heizelement 203 weist ein Trägerplättchen 203c, bestehend aus einer Einzelschicht aus Al₂O₃ auf. Ein Platin-Dünnfilmelement 203a als Heizer und seine elektrischen Anschlussleitungen 203b sind auf der Rückseite der Trägerfolie 203c angeordnet und deren Lage daher gestrichelt dargestellt.

Die Keramikfolien 201 a, 201 b sind im Bereich 206 entweder durch direktes miteinander Versintern oder über ein Glaslot verbunden. Die Anschlussflächen 204a', 204b',204c', 204d', 205a', 205b' sind von der zweiten Keramikfolie 201 b unbedeckt, damit eine Verbindung mit hier nicht dargestellten elektrischen Anschlusskabeln erfolgen kann.

Figur 15 zeigt ein Heißfilm-Anemometer mit einem Keramikfolien-Laminat 201, das aus einer ersten Keramikfolie 201 a aus Al₂O₃ und einer zweiten Keramikfolie 201 b aus Al₂O₃ gebildet ist. In Serie zwischen der ersten Keramikfolie 201 a und der zweiten Keramikfolie 201 b sind zwei Temperaturmesselemente 202, 208 und zwei Heizelemente 203, 207 teilweise eingebettet und elektrisch kontaktiert.

Dies ermöglicht wiederum eine Messung nach dem Prinzip des Heißfilm-Anemometers, wie bereits zu Fig. 14 beschrieben. Die Anzahl der Heizelementen 203, 207 und Temperaturmesselementen 202, 208 erlaubt es nun aber, jeweils einen elektrischen Regelkreis für je ein Heizelement und je ein Temperaturmesselement (202 und 203 bzw. 207 und 208) zu bilden und auszuwerten. Mit diesem Strömungssensorelement ist es nun möglich, die Strömungsrichtung eines Mediums zu erkennen, da ein Übertrag an thermischer Energie von dem Heizelement, das in Strömungsrichtung zuerst angeordnet ist, an das nachfolgende Heizelement erfolgt. Die Temperaturänderung beziehungsweise Erwärmung des nachfolgenden Heizelementes führt zu einer geringeren Leistungsaufnahme dieses Heizelementes, was als Signal für die Strömungsrichtung des Mediums ausgewertet werden kann.

Fig. 15a zeigt das Heißfilm-Anemometer aus Fig. 15 in Seitenansicht. Dabei ist erkennbar, dass die Temperaturmesselemente 202, 208 und die Heizelemente 203, 207 über elektrische Leiterbahnen 204a, 204b, 204c, 204d, 205a, 205b, 209a, 209b, 210a, 210b mit Anschlussflächen 204a', 204b', 204c, 204d, 205a', 205b', 209a', 209b', 210a', 210b' elektrisch kontaktiert sind. Die elektrischen Leiterbahnen 204a, 204b, 204c, 204d, 205a, 205b, 209a, 209b, 210a, 210b sind auf der ersten Keramikfolie 201 a angeordnet und teilweise von der zweiten Keramikfolie 201 b bedeckt. Daher ist ihre Lage teilweise gestrichelt angedeutet. Das Temperaturmesselement 202 weist ein Trägerplättchen 202c bestehend aus zwei Einzelschichten aus Al₂O₃ und SiO₂ auf.

Ein Platin-Dünnfilmelement 202a zur Temperaturmessung und 202d zum Ausglühen und seine elektrischen Anschlussleitungen 202b sind auf der Rückseite des Trägerplättchens 202c angeordnet und deren Lage daher gestrichelt dargestellt. Das Heizelement 203 weist ein Trägerplättchen 203c bestehend aus zwei Einzelschichten aus Al₂O₃ und SiO₂ auf. Ein Platin-Dünnfilmelement 203a als Heizer und seine elektrischen Anschlussleitungen 203b sind auf der Rückseite des Trägerplättchen 203c angeordnet und deren Lage daher gestrichelt dargestellt. Das Heizelement 207 weist ein Trägerplättchen 207c bestehend aus zwei Einzelschichten aus Al₂O₃ und SiO₂ auf. Ein Platin-Dünnfilmelement 207a als Heizer und seine elektrischen Anschlussleitungen 207b sind auf der Rückseite des Trägerplättchen 207c angeordnet und deren Lage daher gestrichelt dargestellt. Das Temperaturmesselement 208 weist ein Trägerplättchen 208c bestehend aus zwei Einzelschichten aus Al₂O₃ und SiO₂ auf. Ein Platin-Dünnfilmelement 208d zur Temperaturmessung und 202a zum Ausheizen und seine elektrischen Anschlussleitungen 208b sind auf der Rückseite des Trägerplättchen 208c angeordnet und deren Lage daher gestrichelt dargestellt.

Die Keramikfolien 201 a, 201 b sind im Bereich 206 entweder durch direktes miteinander Versintern oder über ein Glaslot verbunden. Die Anschlussflächen 204a', 204b', 204c', 204d', 205a', 205b', 209a', 209b', 210a', 210b' 210c', 210d' sind von der zweiten Keramikfolie 201 b unbedeckt, damit eine Verbindung mit hier nicht dargestellten elektrischen Anschlusskabeln erfolgen kann.

Figur 16a zeigt das Heißfilm-Anemometer aus Fig. 16 in Seitenansicht. Dabei ist erkennbar, dass die Temperaturmesselemente 202, 208 und das Doppelheizelement 211,211' über elektrische Leiterbahnen 204a, 204b, 204c, 204d, 205a, 205b, 209a, 209b, 210a, 210b 210c, 210d mit Anschlussflächen 204a', 204b', 204c', 204d', 205a', 205b', 209a', 209b', 210a', 210b' 210c', 210d' elektrisch kontaktiert sind. Die elektrischen Leiterbahnen 204a, 204b, 205a, 205b, 209a, 209b, 210a, 210b, 210c, 210d sind auf der ersten Keramikfolie 201 a angeordnet und teilweise von der zweiten Keramikfolie 201 b bedeckt. Daher ist ihre Lage teilweise gestrichelt angedeutet. Das Temperaturmesselement 202 weist ein Trägerplättchen 202c, bestehend aus einer Einzelschicht aus Al₂O₃ auf. Ein Platin-Dünnfilmelement 202a zur Temperaturmessung und 202d zum Ausheizen und seine elektrischen Anschlussleitungen 202b sind auf der Rückseite des Trägerplättchens 202c inklusive elektrisch isolierender Beschichtung angeordnet und deren Lage daher gestrichelt dargestellt. Das Doppelheizelement 211,211' weist ein Trägerplättchen 211 c, bestehend aus zwei Einzelschichten aus Al₂O₃ und SiO₂ auf. Platin-Dünnfilmelemente 211 a, 211 a' als Heizer und deren elektrischen Anschlussleitungen 211 b, 211 b' sind auf der Rückseite des Trägerplättchen 211 c inklusive elektrisch isolierender Beschichtung angeordnet und deren Lage daher gestrichelt dargestellt. Das Temperaturmesselement 208 weist ein Trägerplättchen 208c, bestehend aus zwei Einzelschichten aus Al₂O₃ und SiO₂ auf. Ein Platin-Dünnfilmelement 208d zur Temperaturmessung und 208a zum Ausheizen und dessen elektrische Anschlussleitungen 208b sind auf der Rückseite des Trägerplättchens 208c angeordnet und deren Lage daher gestrichelt dargestellt.

Die Keramikfolien 201 a, 201 b werden im Bereich 206 direkt miteinander versintert oder mittels Glaslot verbunden. Die Anschlussflächen 204a', 204b', 204c', 204d', 205a', 205b', 209a', 209b', 210a', 210b' 210c', 210d' sind von der zweiten Keramikfolie 201 b unbedeckt, damit eine Verbindung mit hier nicht dargestellten elektrischen Anschlusskabeln erfolgen kann.

Figur 17 zeigt ein Heißfilm-Anemometer mit einem Keramikfolien-Laminat 201, das aus einer ersten Keramikfolie 201 a aus Al₂O₃ einer zweiten Keramikfolie 201 b aus Al₂O₃ und einer dritten Keramikfolie 201 c aus Al₂O₃ gebildet ist. Zwischen der zweiten Keramikfolie 201 b und der dritten Keramikfolie 201 b sind zwei Temperaturmesselemente 202, 202' teilweise eingebettet und elektrisch kontaktiert. Zwischen der erstenten Keramikfolie 201 a und der zweiten Keramikfolie 201 b ist ein Doppelheizelement 211, 211' teilweise eingebettet und elektrisch kontaktiert. Unter einem Doppelheizelement wird hier verstanden, dass zwei Heizelemente, die elektrisch getrennt angesteuert werden können, auf einem gemeinsamen Trägerplättchen ausgeführt sind. Auch mit diesem Strömungssensorelement ist es möglich, die Strömungsrichtung eines Mediums zu erkennen.

Figur 18 und 18a und Figur 19 zeigen jeweils ein Heißfilm-Anemometer mit einem Keramikfolien-Laminat 201, das aus einer ersten Keramikfolie 201 a, einer zweiten Keramikfolie 201 b und einer dritten Keramikfolie 201 c aus Al₂O₃ gebildet ist. Zwischen der ersten Keramikfolie 201 a und der zweiten Keramikfolie 201 b ist ein Temperaturmesselement 202 teilweise eingebettet und elektrisch kontaktiert. Zwischen der zweiten Keramikfolie 201 b und der dritten Keramikfolie 201 c ist ein Heizelement 203 teilweise eingebettet und elektrisch kontaktiert. Mit diesen Strömungssensorelementen ist es nicht möglich, die Strömungsrichtung eines Mediums zu erkennen.

Figur 19a zeigt das Strömungssensorelement aus Fig. 19 in Seitenansicht. Dabei ist erkennbar, dass das Temperaturmesselement 202 und das Heizelement 203 über elektrische Leiterbahnen 204a, 204b, 205a, 205b mit Anschlussflächen 204a', 204b', 205a', 205b' elektrisch kontaktiert sind. Die elektrischen Leiterbahnen 205a, 205b sind auf der ersten Keramikfolie 201 a angeordnet und teilweise von der zweiten Keramikfolie 201 b bedeckt. Daher ist ihre Lage teilweise gestrichelt angedeutet. Die elektrischen Leiterbahnen 204a, 204b, sind auf der zweiten Keramikfolie 201 b angeordnet und teilweise von der dritten Keramikfolie 201 c bedeckt. Daher ist ihre Lage teilweise gestrichelt angedeutet. Das Temperaturmesselement 202 weist eine Trägerfolie 202c, bestehend aus einer Einzelschicht aus Al₂O₃ auf. Ein Platin-Dünnfilmelement 202a zur Temperaturmessung und seine elektrischen Anschlussleitungen 202b sind auf der Rückseite des Trägerplättchen 202c inklusive elektrisch isolierender Beschichtung angeordnet und deren Lage daher gestrichelt dargestellt. In bevorzugter Ausführung ist das Trägerplättchen mit einem zusätzlichen Dünnfilmelement 202d zum Ausheizen des Temperaturelements ausgestattet, das elektrisch analog kontaktiert ist. Das Heizelement 20 weist ein Trägerplättchen 203c, bestehend aus einer Einzelschicht aus Al₂O₃ auf. Ein Platin-Dünnfilmelement 203a als Heizer und seine elektrischen Anschlussleitungen 203b sind auf der Rückseite des Trägerplättchens 203c angeordnet und deren Lage daher gestrichelt dargestellt. Die Keramikfolien 201 a, 201 b sind im Bereich 206' entweder durch direktes miteinander Versintern oder über ein Glaslot verbunden. Die Anschlussflächen 5a', 5b' sind von der zweiten Keramikfolie 1 b unbedeckt, damit eine Verbindung mit hier nicht dargestellten elektrischen Anschlusskabeln erfolgen kann. Die Keramikfolien 1 b, 1 c sind im Bereich 206 entweder durch direktes miteinander Versintern oder über ein Glaslot verbunden. Die Anschlussflächen 204a', 204b' sind von der dritten Keramikfolie 201 c unbedeckt, damit eine Verbindung mit hier nicht dargestellten elektrischen Anschlusskabeln erfolgen kann.

Figur 19b zeigt das Heißfilm-Anemometer aus Fig. 19a in Seitenansicht, wobei dieses in den Querschnitt einer Rohrleitung 212 eingebaut. Das die Trägerfolien 202c, 203c des Temperaturmesselements 202 und des Heizelements 203 sind dabei parallel zur Strömungsrichtung in die Rohrleitung eingebracht.

Figur 20 und Figur 21 zeigen jeweils ein Heißfilm-Anemometer mit einem Keramikfolien-Laminat 201, das aus einer ersten Keramikfolie 201 a, einer zweiten Keramikfolie 201 b, einer dritten Keramikfolie 201 c und einer vierten Keramikfolie 201 d aus Al₂O₃ gebildet ist. Zwischen der ersten Keramikfolie 201 a und der zweiten Keramikfolie 201 b ist ein Temperaturmesselement 202 teilweise eingebettet und elektrisch kontaktiert. Zwischen der zweiten Keramikfolie 201 b und der dritten Keramikfolie 201 c ist ein Doppelheizelement 211, 211' teilweise eingebettet und elektrisch kontaktiert. Zwischen der dritten Keramikfolie 201 c und der vierten Keramikfolie 201 d ist ein weiteres Temperaturmesselement 202' teilweise eingebettet und elektrisch kontaktiert.

Figur 22 zeigt ein Heißfilm-Anemometer im Querschnitt A - A' (siehe Fig. 22a) mit einem mehrteiligem Keramikbauteil 213a, 213b, 214a, 214b aus Al₂O₃ das ein Temperaturmesselement 202 und ein Heizelement 203 aufweist. Das Keramikbauteil 213a, 213b, 214a, 214b weist zwei Hohlräume 215a, 215b auf, die im Bereich des Temperaturmesselementes 202 bzw. des Heizelementes 203 gasdicht verschlossen sind. Zum Einbau in eine Rohrleitung ist ein Anschlussflansch 216 vorhanden.

Figur 22a zeigt das Heißfilm-Anemometer aus Fig. 22 in Seitenansicht. Dabei sind das Temperaturmesselement 202 und das Heizelement 203 über hier nur teilweise erkennbare elektrische Leiterbahnen 204a, 204b, 205a, 205b mit Anschlussflächen 204a', 204b', 205a', 205b' elektrisch kontaktiert. Die elektrischen Leiterbahnen 204a, 204b, 205a, 205b sind auf einer Keramikplatte 214a angeordnet und - in dieser Darstellung nicht sichtbar - teilweise von einer zweiten Keramikplatte 214b bedeckt. Das Temperaturmesselement 202 weist ein Trägerplättchen 202c, bestehend aus einer Einzelschicht aus Al₂O₃ auf. Ein Platin-Dünnfilmelement 202a zur Temperaturmessung und seine elektrischen Anschlussleitungen 202b sind auf der Rückseite der Trägerfolie 202c angeordnet und deren Lage daher gestrichelt dargestellt. In bevorzugter Ausführung weist das Trägerplättchen 202c ein zusätzliches Platin-Dünnfilmelement 202d mit einem um eine Größenordnung kleineren Widerstand auf. Dieser zum Ausheizen oder Ausglühen bestimmte Widerstand ist mit einer zusätzlichen Kontaktierung analog dem Dünnfilmelement 202a elektrisch kontaktiert. Das Heizelement 203 weist ein Trägerplättchen 203c bestehend aus einer Einzelschicht aus Al₂O₃ auf. Ein Platin-Dünnfilmelement 203a als Heizer und seine elektrischen Anschlussleitungen 203b sind auf der Rückseite des Trägerplättchen 203c angeordnet und deren Lage daher gestrichelt dargestellt.

Die Keramikplatten 214a, 214b sind entweder durch direktes miteinander Versintern oder über ein Glaslot miteinander und mit Rohrschalen 213a, 213b zum Keramikbauteil verbunden. Es ist aber auch möglich, zwei Halbrohre (213a plus 214a; 213b plus 214b) zu verwenden, bei denen die Keramikplatte 214a und die Rohrschale 213a beziehungsweise die Keramikplatte 214b und die Rohrschale 214b zu jeweils einem einstückigen Bauteil zusammengefasst sind. Die Anschlussflächen 204a', 204b', 205a', 205b' sind von der zweiten Keramikplatte 214b unbedeckt, damit eine Verbindung mit hier nicht dargestellten elektrischen Anschlusskabeln erfolgen kann.

Nach Figur 23a ist ein Heißfilm-Anemometer mit Verguss oder Glas 118 in einer Trägerscheibe 121 aus hitze- und abgasbeständigem Edelstahl gefertigt. Durch eine strukturierte Innenwand des Vergussraums z.B. durch ein Gewinde 130 wird eine gute Verkrallung des Vergusses erreicht. Der Bereich der Trägerscheibe 121, durch den das Sensorelement zum Medium hin austritt, hat eine Rechteckkontur, die nur geringfügig größer ist als der Sensorelementquerschnitt.

Dadurch wird das Heißfilm-Anemometer gerichtet in dem medienführenden Rohr 105 gehaltert und der Innenraum des Komplettsensors gegen das Medium hin abgedichtet.

Die Trägerscheibe 121 ist in ein Gehäuse 124 eingesetzt und mit einer Rundnaht 122 dicht verschweißt. In das Gehäuserohr 124 ist das Gehäuse 111 eingeschweißt. Im Gehäuse 111 wird der Isolierkörper 110 aus temperaturfestem Kunststoff oder Keramik mit einem Ring 109, der durch eine Sicke 117 fixiert ist, gehaltert. Am Kabelausgang wird mit der Sicke 116 eine Kabeldurchführungstülle aus einem Elastomer dicht befestigt. Zuleitungen 104 sind durch die Bohrungen einer Durchführungstülle 114 geführt. Jede Zuleitung ist über einen Crimp 125 mit einer Kontakthülse 103 elektrisch verbunden. Die Kontakthülse 103 weist unter einem Isolierteil 110 eine Verbreiterung 126 und über dem Isolierteil 110 eine Fläche 127, die breiter als der Kontakthülsendurchmesser ist, auf, damit die Kontakthülse in axialer Richtung im Isolierteil 110 festgelegt ist. Auf der Fläche 127 werden die Anschlussdrähte 102 mit der Schweißung 115 elektrisch kontaktiert.

Die Befestigung des Komplettsensors zum medienführenden Rohr 105 erfolgt über eine handelsübliche Schneckengewinde-Schlauchschelle 113 und ein auf dem medienführenden Rohr 105 aufgeschweißtes, geschlitztes Blechflanschteil 112.

Die Ausrichtung des Heißfilm-Anemometer 101 im Rohr 105 erfolgt über einen Zentrierstift 119, der auf dem Gehäuserohr 124 befestigt ist und über den breiten Schlitz 120 in dem Blechflanschteil 112. Gegenüber einem breiten Schlitz 120 ist ein schmaler Schlitz 123 vorgesehen, der nur dazu dient, das Blechflanschteil 112 leichter an das Gehäuserohr 124 andrücken zu können. So wird eine Montage nur in der richtigen Winkelposition zulassen.

Figur 23b zeigt eine andere Ausführung mit einer keramischen Trägerscheibe 107, in der das Strömungselement 101 mit Glaslot 118 in der Trägerscheibe 107 befestigt ist. Die Trägerscheibe 107 ist zusammen mit einer hochtemperaturbeständigen Dichtung 108 aus Glimmer oder Graphit in der metallischen Fassung 106 eingebördelt. Die Fassung 106 ist ebenfalls mit dem Gehäuserohr 124 dicht verschweißt.

## Patentansprüche

1. Messeinrichtung (1) enthaltend einen Schichtwiderstand (2), einen Träger (3), insbesondere Hohlkörper, in dem der Schichtwiderstand mechanisch befestigt ist, und eine Abschirmung (4a) oder ein metallisches Gehäuse (4b), die oder das gegen den Träger abgedichtet ist, **dadurch gekennzeichnet, dass** in der Längsrichtung des Trägers die elektrischen Zuleitungen für den Schichtwiderstand angeordnet sind und der Schichtwiderstand entlang der Trägerlänge von der Dichtung (5) beabstandet ist, die den Träger gegen die Abschirmung (4a) oder das Gehäuse (4b) abdichtet.

2. Messeinrichtung nach Anspruch 1, **dadurch gekennzeichnet, dass** die Abschirmung (4a) mindestens eine Durchführung um mindestens einen Schichtwiderstand aufweist und im Übrigen den Träger (3) im Bereich des Schichtwiderstandes (2) umschließt.

3. Anordnung einer Messeinrichtung insbesondere nach Anspruch 1 oder 2, in einem Abgasrohr oder Abgasrückführrohr, **dadurch gekennzeichnet dass die** anemometrische Messeinrichtung mit einem Schichtwiderstand (2) in das Abgasrohr oder Abgasrückführrohr ragt und der Träger (3) des Schichtwiderstandes durch das Abgasrohr oder Abgasrückführrohrs führt und auf seiner außerhalb des Abgasrohres oder Abgasrückführrohrs befindlichen Seite gegen ein metallisches Gehäuse (4b) abgedichtet wird.

4. Verfahren zur Herstellung einer anemometrischen Messeinrichtung, umfassend ein Heizelement zur anemometrischen Messung, das gegebenenfalls noch einen oder zwei Messwiderstände aufweist und gegebenenfalls einen zusätzlichen Messwiderstand, der gegebenenfalls noch einen Heizwiderstand zur Selbstreinigung aufweist, wobei der als Heizelement ausgebildete Schichtwiderstand in einem Träger, insbesondere Hohlkörper befestigt wird, dessen Ausdehnungskoeffizient sich von dem des Schichtwiderstandes um nicht mehr als 2,5 x 10⁻⁶/K, insbesondere um maximal 1 x 10⁻⁶/K unterscheidet, **dadurch gekennzeichnet, dass** der Träger in einem metallischen Gehäuse so befestigt wird, dass er außerhalb der Befestigung von dem metallischen Gehäuse beabstandet bleibt.

5. Verwendung eines metallischen Gehäuses (4) zur Wärmeisolierung einer Messeinrichtung (1) nach einem der Ansprüche 1 oder 2 gegen heiße Abgase, **dadurch gekennzeichnet, dass** das metallische Gehäuse um einen Träger (3), insbesondere Hohlkörper, in dessen in das Abgasrohr ragenden Bereichs um einen Schichtwiderstand beabstandet ist.

6. Verwendung einer Messeinrichtung nach einem der Ansprüche 1 oder 2 als anemometrische Messeinrichtung oder als Rußsensor oder als Temperatursensor.

7. Messverfahren mit einem Schichtwiderstand (2) innerhalb eines über 500°C heißen Fluids in einem Metallrohr, wobei der Schichtwiderstand (Chip) in einem Träger (3) befestigt ist, der außerhalb des Metallrohres gegen ein Metallgehäuse (4b) abgedichtet ist, **dadurch gekennzeichnet, dass** das Metallgehäuse dicht mit dem Metallrohr verbunden ist.

8. Vorrichtung zur Abgasrückführung aus einem Austrittsbereich (34) einer Fahrzeug-Brennkraftmaschine (31) in einen Lufteintrittsbereich (32), dem ein einstellbares Gemisch aus Abgas und einströmender Luft der Maschine (31) zuführbar ist, und eine Kraftstoffmenge einstellbar ist, wobei der Austrittsbereich (34) über eine Abgasrückführleitung, die ein steuerbares Ventil (35), eine Abgaskühlvorrichtung (8) und ein Heißfilm-Anemometer (40) aufweist, mit einem Eintrittsbereich (32) der Brennkraftmaschine (31) verbunden ist, wobei das Heißfilm-Anemometer (40) einen Heizwiderstand (29) und einen Temperaturmesswiderstand (27, 202, 129, 208) aufweist, der Heizwiderstand (29, 128, 203, 207) und der Temperaturmesswiderstand (27, 202, 129, 208) separate Schichtwiderstände sind, **dadurch gekennzeichnet, dass** das Heißfilm-Anemometer (40) in einem Abgasrückführkanal vor der Kühlung (8) angeordnet ist oder in einem luftgekühlten Kühler oder dass weder für die Frischluft noch für das gekühlte Abgas ein Heißfilm-Anemometer (40) angeordnet ist; und
dass deren Heißfilm-Anemometer (40) eine Öffnung eines Deckels (107) oder einer Hohlkörperfläche aufweist, in der ein Temperaturmesselement (27, 129) und ein Heizelement (29, 128) befestigt sind.

9. Verfahren zur Selbstreinigung eines Heißfilm-Anemometers (40) einer Vorrichtung nach einem der Ansprüche 1, 2 oder 8 bei dem ein Temperaturmesselement (27, 129, 202, 208) und ein Heizelement (29, 128, 203, 207) auf einem gemeinsamen Trägerelement (107, 201) angeordnet sind oder in einer Öffnung eines Deckels (107) oder einer Hohlkörperfläche befestigt sind, **dadurch gekennzeichnet, dass** das Temperaturmesselement (27, 202, 129, 208) einen Platin-Dünnfilm-Widerstand (202a) auf keramischem Untergrund (202c) zur Temperaturmessung aufweist und mit einem zusätzlichen Platin-Dünnfilm-Widerstand (202d) geheizt wird.

10. Verfahren zur Herstellung eines Heißfilm-Anemometers (40) einer Vorrichtung nach einem der Ansprüche 1, 2 oder 8 aus Schichtwiderständen und einem Deckel (107) oder einem Hohlkörper, wobei wenigstens zwei Schichtwiderstände, deren Widerstand sich um ein bis zwei Größenordnungen unterscheiden, in Öffnungen des Deckels (107) oder Hohlkörpers gesteckt und in den Öffnungen befestigt werden oder bei dem ein Temperaturmesselement (27, 129, 202, 208) und ein Heizelement (29, 128, 203, 207) auf einem Trägerelement (107, 201) angeordnet werden und das Trägerelement (201) aus Keramikfolien (201 a, 201 b, 201 c) laminiert wird.
